# EUROPEAN PATENT SPECIFICATION

(11) **EP 3 999 317 B1**
(45) Date of publication and mention of the grant of the patent: **15.05.2024**
(21) Application number: 20740042.5
(22) Date of filing: 17.07.2020
(51) Int. Cl.: B29C 64/118, B29C 64/188, B29C 64/40, B33Y 10/00, B33Y 30/00, B33Y 40/20, B33Y 80/00, B29C 64/182, B33Y 70/10

(54) **A METHOD FOR PRINTING A POROUS STRUCTURE AND A POROUS STRUCTURE**
VERFAHREN ZUM DRUCKEN EINER PORÖSEN STRUKTUR UND EINE PORÖSE STRUKTUR
PROCÉDÉ D'IMPRESSION D'UNE STRUCTURE POREUSE ET UNE STRUCTURE POREUSE

(30) Priority: 19.07.2019 EP 19187363
(43) Date of publication of application: 25.05.2022
(73) Proprietor: VITO NV, 2400 Mol (BE)
(72) Inventor: MICHIELSEN, Bart, 2400 Mol (BE); LEFEVERE, Jasper, 2400 Mol (BE); WELTENS, Pieter, 2400 Mol (BE); KUS, Monika, 2400 Mol (BE); KENNEMA, Marco Oskar, 67056 Ludwigshafen (DE); RUFF, Detlef, 67056 Ludwigshafen (DE)
(74) Representative: V.O.
(86) International application number: PCT/EP2020/070384
(87) International publication number: WO 2021/013768

(56) References cited:
- EP-A1- 2 883 685
- EP-A1- 3 476 898
- EP-A1- 3 647 020
- WO-A1-2019/023119
- US-A1- 2016 263 823
- US-A1- 2017 259 507
- US-A1- 2019 168 300
- US-B1- 7 527 671

## Description

### FIELD OF THE INVENTION

The method according to the invention is defined in claim 1 and the three-dimensional porous structure according to the invention is defined in claim 15.

### BACKGROUND TO THE INVENTION

EP 2 883 685 A1 discloses a machine for the manufacture of three-dimensional porous structures applicable to tissue regenerative medicine, comprising a plastic material extrusion head including a plastic material loading hopper, plastic material heating means and plastic material conducting means for conducting the plastic material from the loading hopper to a melted plastic material application nozzle which is arranged inside a heated chamber. The nozzle has a plurality of outlets for the simultaneous deposition of several strands of melted plastic material and the heated chamber is arranged a tray with an adhesive surface having a horizontal translational movement, and on which the nozzle deposits the strands of melted plastic material to form the three-dimensional porous structures, and the extrusion head has a relative rotational movement with respect to the tray. Additive manufacturing is currently widely used and various techniques exist. It can help building a structure layer-by-layer and the manufactured structure can be employed in various applications.

Extrusion-based additive manufacturing methods have been employed for fabrication of porous structures. A material (e.g. paste, polymers, hydrogels, etc.) is extruded through a nozzle in the form of filaments. A certain arrangement of filaments can be obtained by relative movement of the nozzle with respect to a print bed during deposition. During the material extrusion, filaments are extruded from a nozzle and positioned relative to one another according to a predetermined pattern providing the desired properties of the manufactured porous structure. The lay-down pattern is determined by the print path and has major impact on the properties of the printed structure. In this way, complex geometries and porous structures can be obtained with a fully interconnected network of pores which may be required for some applications.

It may be challenging using conventional extrusion fabrication techniques to produce porous structures with great accuracy and reproducibility, especially at the outer surface, in a fast way without start-stop. Often, the side surfaces are partially dense or less porous due to the turns of extruded filament. As a result, the mechanical and porous characteristics of porous structures obtained by means of extrusion based additive manufacturing may be difficult to predict.

There is a need for improving the overall extrusion based printing process to obtain structures with open porosity on the side surface, especially for certain applications were large volumes are required and continuous extrusion during 3D printing is needed. Furthermore, there is a desire to enhance the printing quality and suitability for printing porous structures for a wider range of applications. Examples of such applications are the use of porous structures as catalyst or catalytic supports, sorbents, heat exchangers and chromatographic materials.

### SUMMARY OF THE INVENTION

It is an object of the invention to provide for a method that obviates at least one of the above mentioned drawbacks.

Additionally or alternatively, it is an object of the invention to improve the extrusion based 3D printing process for manufacturing porous structures.

Additionally or alternatively, it is an object of the invention to improve printability and/or printing quality of porous structures.

Additionally or alternatively, it is an object of the invention to improve the efficiency and/or speed of an extrusion based additive manufacturing process for fabricating porous structures.

Thereto, the invention provides for a method for simultaneously manufacturing a plurality of porous three-dimensional parts, by manufacturing a three-dimensional structure of the plurality of porous three-dimensional parts connected to each other, the method including depositing interconnected filaments of a build material in a predetermined arrangement in a plurality of consecutively stacked layers,
wherein the build material comprises a viscous material composition comprising an inorganic particulate material, wherein the filaments of the consecutive layers are connected to one another at least at contact points between filaments of consecutive layers to obtain the porous structure with interconnected pores between the filaments, the filaments of the consecutive layers being at an angle to each other, wherein a plurality of less frangible regions are formed in the arrangement of filaments to form the plurality of three-dimensional parts, wherein one or more preselected frangible regions are formed in the arrangement of filaments between the plurality of three-dimensional parts, and wherein the filaments are deposited such that the one or more frangible regions of the porous structure are connected to the plurality of less-frangible regions, wherein the frangible regions connect adjacently positioned three-dimensional parts together, wherein the predetermined arrangement of interconnected filaments is configured such that the one or more frangible regions form structurally weakened zones of the porous structure such that the porous structure breaks along said one or more frangible regions under influence of a load and/or a stress which does not break the less frangible regions, in order to make the plurality of three-dimensional parts releasable under influence of the load and/or stress.

The less-frangible regions may be substantially non-frangible under predetermined load/stress conditions. The load may for instance be an external load (e.g. force, pressure, vibration, etc.). The stress can for instance be an external stress, and/or an internal material stress (e.g. triggered by temperature change, chemically, etc.). The porous structure obtained with the method of this invention has at least one frangible region and at least one less-frangible region (or substantially non-frangible region) connected to each other in the specific arrangement of the deposited filaments. The specific arrangement (e.g. positioning, build-up, interlayer and intralayer arrangement, etc.) of the interconnected filaments results in a variation of the local mechanical properties of the porous structure such that the frangible and less-frangible regions (cf. non-frangible regions e.g. under predetermined or normal load/stress conditions) in the porous structure can be formed. For this purpose the arrangement of the porous structure is adapted to incorporate weaker frangible zones within the porous structure being formed.

The less-frangible regions of the porous structure have mechanical properties enabling it to withstand forces during the breaking of the more-frangible region. Afterwards the formed porous structures have suitable mechanical properties for the application or to undergo a aftertreatment (e.g. thermal treatment, curing, etc.) to obtain their final material properties. In contrast, the frangible regions are adapted to more easily break than said less-frangible regions. The frangible regions may be configured to purposely fail to withstand forces commonly exerted on the porous structure when converting the porous structure into individual parts and/or during use. Hence, the frangible regions can be more easily removed from the one or more less-frangible regions of the porous structure, while reducing the risk of damaging the less-frangible regions of the porous structure. Furthermore, as the breaking lines are predictable, the porous structure may be manufactured in such a way that the composition or arrangement of the fibers along the periphery of the part, i.e. a porous object, may be better defined in advance and a part can be manufactured with a periphery having a higher printing quality.

The less-frangible regions thus obtained provide individual parts, which are porous with interconnected pores or channels running between the fibers, An important advantage provided by the present invention is that these pores are accessible from the outside of the parts, and that at least part of the pores or channels between the fibers extend towards and up to the outer face of the individual parts. Removing the frangible regions has the effect that the pore system present in the less frangible regions can be accessed from the outside of the less-frangible regions, i.e. along the pores or channels present in the outer surface of the less-frangible regions which give access to the pores or channels between the fibers. This is an important advantage of this invention.

Conventionally, a catalyst designed for use in a reactor takes the form of individual parts, which in prior art processes are individually produced, for example by molding, tableting or extrusion. A problem often occurring with this type of production is that the porosity of the external wall of the individual parts is limited, i.e. the pores or holes present in the external surface often have a smaller diameter than the pores contained inside the parts, and the number of pores is limited. The method of this invention on the other hand permits producing a large number of less-frangible regions in one process step as part of a larger porous structure, and of breaking this large structure into smaller pieces, at minimum risk to adversely affecting the accessibility of the pores.

The filaments are deposited in such an arrangement that one or more preselected or predefined frangible regions with reduced mechanical properties, for example a reduced mechanical strength, are formed in the network of filaments. These weak zones can extend throughout multiple layers (interlayer). A predictable breaking path along the one or more frangible regions can be easily achieved in the way, for example by adjustment of the print path. Advantageously, the breaking of the frangible regions can occur without or with a reduced risk of damaging less-frangible regions of the porous structure.

The porous structure may have anisotropic properties depending on the filament arrangement. A particular filament orientation or design can be employed in order to obtain the desired anisotropic properties of the porous structure.

A build material (e.g. paste, suspension, etc.) can be extruded through a nozzle for three-dimensional filament deposition. A suitable build material comprises a viscous paste or a viscous suspension comprising a particulate material, at least one binder and at least one solvent. Particulate materials are inorganic particulate materials.

The deposited filaments can form a layered network. The layers may for instance be successively printed on top of each other, resulting in a structure formed by a stack of successive layers. The filaments are spaced apart with respect to each other in order to define channels therebetween. A porous structure with pores can thus be obtained in this way.

The layerwise deposition of the filaments may include extruding a material through a deposition nozzle to form the filaments while moving the deposition nozzle relative to the print bed. The nozzle can be moved with respect to the print bed, and/or vice versa. Hence, kinematic inversions are also envisaged.

Different types of porous structures can be obtained. Such structure may represent a mesh, a lattice structure, a filament network, a scaffold, a filament framework, or the like. Many types of arrangements and structures are possible. The specific arrangement of the filaments defining the structure of the porous structure may be selected based on the application.

The porous structure manufactured by employing the method according to the invention allows a more predictable way or manner for separating or removing (e.g. by breaking off) one or more sections of the porous structure. This may for example serve the purpose of reducing an overall risk of damaging the less-frangible regions of the porous structure, or in order to permit constructing a large number of less-frangible units at the same time - which may then be separated by breaking the frangible regions. It can be anticipated that under influence of a load larger than a specific (breaking) threshold (depending on the particular characteristics of the porous structure), cracking or breaking may occur along the one or more frangible regions. The frangible regions are sections of the porous structure which are significantly more easily breakable than the less-frangible regions of the porous structure. A crack propagating through the porous structure can run along the frangible regions, enabling a more foreseeable and cleaner break. The method of this invention therefore makes it possible to manufacture a large number of less-frangible units at the same time by manufacturing a large unit, in which less-frangible units are connected by frangible regions which may be broken in a controlled manner. In this way, the printability, and the printing quality of the porous structure can be improved. This will also lead to a large increase in 3D printing speed as the number of turns and start-stop points is reduces. The porosity of the exterior surface of a less-frangible unit, in particular fiber arrangement and accessibility of the interior of the unit may be controlled, as some portions of the porous object to be manufactured can be surrounded by a frangible region to be broken off. For instance, the one or more frangible regions may be arranged around a periphery of a less-frangible region, such that when the frangible regions have been removed, the remaining less-frangible region has a periphery more corresponding to a desired periphery of the porous object to be manufactured.

Optionally, the interconnected filaments are deposited in a predetermined arrangement having a plurality of consecutively stacked layers in a condition which does not induce a phase change to the build material.

According to the invention, extrusion of the build material to achieve filament deposition is carried out at conditions, in particular at a temperature, which do not induce a phase change to the build material.

Optionally, the one or more frangible regions are configured to break in a direction along a cross section of the filaments of the frangible regions which extends under an angle with respect to a longitudinal axis of said filaments forming said frangible regions.

Optionally, the porous structure is subjected to a load to cause breaking of the porous structure along the one or more frangible regions connecting the plurality of the three-dimensional parts, the breaking resulting in a release of the plurality of the three-dimensional parts formed by the less frangible regions, wherein the separated plurality of three-dimensional parts are collected.

Optionally, the build material further comprises a solvent, in particular water and/or an organic solvent, and/or some organic material.

Optionally, the build material comprises at least one solvent, preferably water.

Optionally, the build material is a viscous paste or a viscous suspension of the inorganic particulate material.

Optionally, the inorganic material is catalytically active material, such as for example metals, zeolites, alumina, activated carbon, silica, higher-order oxides, titanium dioxide, calcium carbonate, barium sulphate, graphitic carbon, nanoparticles, nanodots, etc.

Optionally, the inorganic material is a sorbent material, such as for example silica, hydrotalcite, zeolites, clays, perlite, vermiculite, carbon based materials, etc.

Optionally, the one or more frangible regions comprise regions of filaments in consecutive layers with a reduced intertwining of filaments when compared to intertwining of filaments in less frangible regions.

Optionally, the one or more frangible regions are configured to break under a predetermined load, wherein the less-frangible regions are configured to remain intact or largely intact under the same predetermined load. For instance, the frangible regions may have a reduced bending strength, flexural strength, shear strength, fatigue resistance, and/or reliability in bending, shear, and/or compression compared to those of the less-frangible regions of the porous structure.

Optionally, the arrangement of the filaments is configured such that the porous structure has a first flexural strength at the one or more frangible regions, and a second mechanical strength at the one or more less-frangible regions, wherein the first mechanical strength is at least 10%, preferably at least 25% lower than the second mechanical strength, more preferably at least 50% lower, most preferably at least 75% lower. It is also envisaged that other mechanical properties (e.g. shear strength) might have a similar relationship.

Two neighboring layers can be positioned on top of each other in an aligned way. However, it is also possible that the filaments in an upper layer run in a different direction than the fibers in a lower layer.

The method according to the invention can provide an improved control over the porosity in combination with a faster production method. Moreover, an unwanted decrease in porosity as a result of the extrusion method can be prevented. For example, by means of the frangible portions, a controlled break-off can be achieved resulting in an improved porosity at respective faces of the less-frangible region of the porous structure (e.g. outer faces of the porous structure to be manufactured can have increased porosity in this way).

Furthermore, the efficiency of the manufacturing process can be significantly improved. A plurality of less-frangible "parts" are manufactured during a single manufacturing process. As a result, the filaments can be larger, requiring less turns and bends in the print path for extruding the filaments. Hence, the average speed of the deposition of the filaments can be increased. Also the quality can be increased as less turns or bends may be needed at the "parts" incorporated in the porous structure.

Optionally, the method further includes breaking the porous structure along the one or more frangible regions and recovering the less frangible regions which have not been broken under influence of the load. The frangible regions can be effectively removed from the porous structure, thereby forming the porous structure into one or more parts (cf. less-frangible regions) with a desired shape and/or dimensions.

The porous structure contains a plurality of three-dimensional parts, at least two, preferably at least four, more preferably at least eight, or even more, such as more than ten, twenty, fifty, hundred, etc. Different arrangement may be employed. In some examples, the three-dimensional parts may be arranged adjacently, for example positioned in a length direction. Optionally, the three-dimensional parts are arranged according to a regular geometric arrangement. In some examples, the three-dimensional parts are arranged in an irregular geometric arrangement. A combination of regular and irregular geometric arrangements is also possible. The three-dimensional parts may have same or different dimensions and shapes.

By producing a large structure, the printing speed may be maintained at a higher level. In a robocasting process usually the average filament deposition speed is lower when frequently starting and stopping the filament deposition process and in continuous printing or robocasting when decelerating and accelerating in sharp corners or bends. When producing larger structures, typically less corners and/or bends are present for the same printed volume (extruded paste volume) which results in a higher average printing speed. Furthermore, printing longer distances without sharp corners or bends allows to reach a higher maximum printing speed between an acceleration and deceleration step. Depending i.a. on the nature of the paste composition, the robocasting device used, the dimensions and shape of the printed structure, the printing process may be accelerated by 1%, 3%, 5%, 10%, 20%, 50% or even by 200 % or 300%.

Breaking of the one or more frangible regions is facilitated as a result of locally reduced strength of the filament arrangement. Removal of the one or more frangible regions may result in one or more parts or objects being recovered. In this way, the less-frangible regions forming the plurality of three-dimensional parts can be easily separated from each other. This provides significant advantageous when a large number of three-dimensional parts are to be produced. Furthermore, the printing quality of the manufactured parts can be improved by first employing a porous structure with one or more frangible regions and one or more less-frangible regions and successively removing the one or more frangible regions in order to obtain a porous object formed by the remaining one or more less-frangible regions.

Removal can be achieved in different ways. It is also envisaged that removal is achieved by employing an automated process in which certain loads above a threshold breaking load of the frangible regions, although remaining under a breaking load of the less-frangible regions, are applied on the formed porous structure. For instance, one or more formed porous structures may be thrown in a unit arranged to provide sufficient vibrations in order to facilitate break off of the frangible regions. In an example, the vibrations or loads for breaking the one or more frangible regions are achieved by means of introducing the one or more porous structures in a rotating drum, and rotating the drum for a period of time in order to achieve impact and/or frictional forces between the plurality of porous structures. The drum may have one or more openings such that the frangible regions being broken off can pass through for being separated and eventually collected. The openings are small enough for retaining the remaining less-frangible regions.

Optionally, the one or more frangible regions form frangible connections which are configured to enable breakoff of at least a first less-frangible portion of the porous structure from a second less-frangible portion of the porous structure along the one or more frangible regions.

Optionally, the mechanical strength of the frangible regions within the porous structure may vary in order to allow a stepwise breakoff of various portions of the porous structure upon applying increasing loads and/or with increasing stresses. The stepwise breakoff of various portions of the porous structures may result in a more controlled separation of the plurality of three-dimensional porous structure. The less frangible regions forming the plurality of three-dimensional parts can be released and separated with respect to each other. In some examples, each less frangible region may contain several further less frangible regions.

In some examples, the one or more frangible regions may be configured to break in a direction along a cross section of the filaments of the frangible regions which extends under an angle with respect to a longitudinal axis of said filaments forming said frangible regions.

The less-frangible regions, may be regions which remain intact under normal loads and/or stresses during the manufacturing process and/or when used in the specific application.

At the one or more frangible regions the filaments are connected in a structurally weaker manner facilitating breakoff, tearing and/or cracking there along. The filament arrangement can be adapted to incorporate the one or more frangible regions within the porous structure for enabling breakoff of the first portion of the porous structure from the second portion of the porous structure. The first and second portions may form distinct separate parts when the frangible regions have been removed. These first and second portions may corresponds with porous structures to be manufactured.

The structural geometry of the porous structure can be determined by the position and orientation of individual filaments. Filaments are frequently oriented at 0° and 90° on alternate layers. This arrangement is also known as "0/90 orientation". However, many other arrangements are possible, for instance 0/60/120 orientation in which filament orientations are changed by 60° on each subsequent layer. For porous structures with a 0/90 filament orientation, porosity can be considered as a series of long intersecting columnar pores. Alternatively, pores may more closely resemble the geometry of a spiral staircase for a 0/60/120 filament orientation. Many other filament orientations are possible resulting in different pores of the porous structure.

Other aspects of filament positioning can also be varied. For instance, the filaments can be aligned or staggered. In an aligned arrangement of filaments, the filaments are aligned directly above similarly oriented filaments on lower layers. In a staggered arrangement of filaments, the filaments are staggered in an alternating manner by off-setting their horizontal position. These filaments form offset layers and/or diagonal pores. Furthermore, it is also possible that several identical layers are printed before the filament orientation is changed.

Optionally, a filament orientation is locally adjusted such as to incorporate the one or more frangible regions in the porous structure. The filament orientation may include various parameters. For example, a lay-down pattern, a scan pattern, a raster angle, a print path, a layer configuration, etc. may influence the filament orientation or arrangement.

Various different deposition techniques may be employed as the manufacturing process for the porous structure. For example, a 3D model can be imported into an additive manufacturing computer program product. This computer program product may perform a computer implemented method configured to generate a print path, wherein an overall model is converted into layers and for each single layer a print path is determined along which the fibers are deposited. In determining the print path, the one or more frangible paths can be defined in the porous structure, enabling easy breaking by including one or more purposely arranged weaker zones (with respect to the less-frangible regions).

Optionally, at least one printing parameter is adjusted in order to form the one or more frangible regions in the formed porous structure. Printing parameters may include at least one of printing density (e.g. by varying the number of fibers per volume printed), printing speed, volume rate, temperature, etc. Optionally, the composition of the build material can be varied in order to locally vary the material properties. In this way, locally the brittleness and/or frangibility of the material can be increased.

Design parameters such as filament gap, filament diameter and lay down angle play significant roles in controlling porous and mechanical characteristics. For instance, increasing the lay down angle can also increase the porosity which can influences the mechanical properties of the porous structure. By locally providing a customized or adapted printing arrangement the preselected one or more frangible regions can be included in the porous structure to be manufactured.

Optionally, the filaments are deposited in the predetermined arrangement with a reduced density of the porous structure at the one or more frangible regions. This may for instance be achieved by a smaller number of filaments per volume.

Reduced density is possible when using e.g. different materials, different porous filaments, changing filament to filament distance or a combination thereof. In some examples, the filaments may have different material properties resulting in a variation of the density. Also the porosity (cf. size and shape of the pores formed as a result of the filament deposition arrangement) may influence the density of the porous structure.

Optionally, the reduced density is achieved by at least one of: less filaments per unit of length, smaller dimensions of the filaments, or lower material density.

Optionally, the porous structure being formed has a non-uniform porosity, for example a non-uniform number of filaments per unit of volume, or filaments with a varying material density or porosity. The position and orientation of filaments affects the mechanical properties of the porous structure. Porosity may be regarded as one of the most import factors affecting mechanical properties of the porous structure being formed. Optionally, a non-uniform porosity is employed by controlling the lay-down strategy of the filaments. The network of filaments in the porous structure may be arranged to include one or more frangible regions and one or more less-frangible regions, such that under a predetermined load higher than a breaking threshold load of the frangible regions but lower than a breaking threshold load of the less-frangible regions, the one or more frangible regions break off while the one or more less-frangible regions can remain substantially undamaged, the remaining one or more less-frangible regions corresponding to one or more porous objects to be manufactured.

Optionally, a frangible region includes a plurality of frangible connections such that at least a part of the porous structure can be separated from a remaining portion of the porous structure, wherein the frangible regions are configured to break under influence of a load greater than a threshold force. The plurality of frangible connections can be distributed over a frangible region. The relative positions of the frangible regions may ensure a predictable breaking over the porous structure.

Optionally, the filaments are deposited in the predetermined arrangement with an increased porosity of the porous structure between the filaments at the one or more frangible regions.

The pore geometry may be employed as a design factor for introducing weakened frangible regions in the fabrication of the porous structure. The pore geometry may locally be adapted to incorporate the one or more frangible regions. The porosity can be defined as an empty space influencing the mechanical strength and permeability of the porous structure. The mechanical properties can depend on the porosity. The local mechanical integrity can reduce with porosity being locally increased within the porous structure. It will be appreciated that porosity may also relate to interconnectivity, pore size and or the deposition arrangement.

Porosity can be for instance measured in form of a fraction or percentage, for instance the ratio of pores to a total volume of the porous structure. However, the porosity of the porous structure may be varied such as to locally influence the mechanical strength and permeability of the porous structure. The design, geometry and/or arrangement of the filaments can thus be employed for affecting the porosity and the mechanical properties of the porous structure at predetermined locations of the porous structure. By locally adjusting the porosity of the porous structure, the one or more frangible regions and one or more less-frangible regions can be defined within the formed porous structure.

The arrangement of the filaments and the filament position and orientation may result in a range of pore shapes and thus influences the porosity of the porous structure. By implementing local changes in the arrangement of the filaments, the porosity can be adapted in order to incorporate the one or more frangible (weaker) regions and one or more less-frangible (stronger) regions in the porous structure.

Optionally, the higher porosity is achieved by at least one of: increased solvent, less binder material, a different binder material, less particulate material.

Optionally, the one or more frangible regions introduce local weak areas arranged for guiding a breaking line there along. In an example, the one or more frangible regions can be considered as local defect areas with reduced mechanical properties not able to withstand loads above a threshold level, wherein the one or more less-frangible regions of the porous structure can withstand loads above said threshold level.

Optionally, different frangible regions with varying pre-selected frangibility are formed in the porous structure, wherein the different frangible regions are configured to break at different loads.

Optionally, different frangible regions with varying frangibility are formed in the porous structure. The frangible regions may include gradations in structural strength, enabling sequential breaking off. The sequence may be such that first the structurally weaker frangible region is broken. For example, a first subset of frangible regions may be configured to be breakable at a first load and/or stress, and a second subset of frangible regions may be configured to be breakable at a second load and/or stress, wherein the first load and/or stress is lower than the second load and/or stress. The subset of frangible regions may include one or more frangible regions. The less-frangible regions may be better recovered sequentially by selectively breaking frangible regions in multiple steps (e.g. different loading steps).

Optionally, the filaments are deposited in the predetermined arrangement with an increased filament-to-filament distance at the one or more frangible regions.

The filament-to-filament distance creates voids within the porous structure. This interspacing between adjacent filaments in the filaments arrangement can be adapted so as to obtain a locally increased porosity (or porosities) at the one or more frangible regions, thereby enabling more easy breakoff than the less-frangible regions of the porous structure.

The porous structure possesses well-defined pores. The filament-to-filament distance between adjacent filaments differs based on the chosen infill density. As the infill density increases, the filament-to-filament distance (e.g. center-to-center spacing of adjacent filaments) decreases. The printing infill density and thus porosity is (locally) varied in order to (locally) form one or more frangible regions in the porous structure. The infill density defines the amount of material filled into the object and subsequently relates to the porosity of the 3D printed structure. The infill density can range from 0% to 100%, where 0% results in a completely hollow object and 100% infill results in a completely solid object. Each filament may have a material porosity. Hence, the printed structure may have a macro-porosity or intra filament porosity, as well as meso- and micro-porosity in the filament material. The accessibility of the micro- and meso-porosity in the filaments may increase by breaking the frangible regions and exposing the edges or sides of the less frangible regions.

Different infill patterns can be employed (triangular, square, hexagonal, etc.). The porous structure may include structurally weakened and unweakened zones in the network of filaments being layerwise deposited, corresponding to the frangible regions and the less-frangible regions, respectively. The frangible and less-frangible regions may be obtained by the particular structural arrangement of the filaments within the porous structure. Upon application of a breaking force (being larger than a threshold for the one or more frangible regions), the porous structure can break or tear along the one or more frangible regions, in a predictable manner. The frangible regions can detach when being severed and an improved quality of the obtained 3D printed porous structure may be obtained. For instance, the porosity at the surface of less-frangible regions can be maintained.

It will be appreciated that the term filament-to-filament distance may be understood as a spacing between two adjacent filaments within a same layer. This spacing may be a center to center distance or an edge to edge distance between two neighboring filaments. Other terms may also be used for this feature, such as for example, filament spacing, interspacing, filament gap, etc.

Optionally, the filament-to-filament distance within a layer at the one or more frangible regions is at least 25% larger than the adjacent less-frangible regions, , more preferably at least 50% larger than the adjacent less-frangible regions, even more preferably at least 100% larger than the adjacent less-frangible regions and most preferable at least 200% larger than the adjacent less-frangible regions .

Various filament diameters can be used. The filament diameter may in some examples be compared to a diameter of the filament adjacent or within the one or more frangible regions of the porous structure. Optionally, the filament diameter is in a range of 2 micrometer to 5 centimeter. In some examples, the filament diameter may be in a range of 8 micrometer to 3 centimeter. For example, the filament diameter may be in a range of 50 micrometer to 3 millimeter.

In a preferred embodiment of the invention, the cross section of the one or more less frangible regions at varying positions may have varying dimensions. This may permit building of less frangible regions in the shape of for example a pyramid, a tetrahedron, a cylinder, but also a truncated pyramid, a beveled cylinder, etc. According to a further preferred embodiment, the cross section of the one or more less frangible regions at varying positions may have varying shapes. Cross section of the one or more less frangible regions may for example be substantially rounded for example circular or oval or the like, or may correspond to a regular or irregular geometric shape, for example square, rectangular, octahedral, trapezoidal or the like.

Optionally, the filament-to-filament distance within a layer at the one or more frangible regions is larger than 0.1 millimeter, preferably larger than 0.5 millimeter, more preferably larger than 1 millimeter and even more preferably larger than 2 millimeter. This filament-to-filament distance in the one or more frangible regions may depend on the material properties as well as the filament-to-filament distance in the less-frangible regions. Additionally, the optional posttreatment of the formed porous structure can also be relevant for determining a suitable filament-to-filament distance.

With a constant filament-to-filament distance, the increase of filament diameter decreases porosity and thus increases the mechanical properties of the porous structure. However, with a constant filament diameter, the increase of filament gap increases the porosity and consequently, decreases the mechanical properties of the porous structure. The filaments are laid further from each other and the porous structure contains less deposited solid material, which creates larger empty spaces in the porous structure resulting in higher porosity. On the other hand, when the filaments are laid closely, this results in an increased deposition of solid material and thus accordingly the pore volume is decreased.

With a constant filament diameter, the porous structure with smaller filament-to-filament distance is stiffer than that with larger filament-to-filament distance. This variation in mechanical properties resulting from a change of the filament-to-filament distance can be attributed to the fact that the filament junctions mainly resist the deformation when the porous structure is compressed. Under compression, the junctions can behave like columns and the porous structure with smaller filament-to-filament distance has more number of columns or junctions that resist the deformation more, so that the porous structure becomes stiffer. On the other hand, the porous structure with larger filament-to-filament distance has less number of columns or junctions that resist the deformation to a lesser extent, rendering the porous structure weaker. Hence, the dynamic stiffness and equilibrium modulus increases with decrease of filament-to-filament distance, which is directly related to the porosity of the porous structure.

Optionally, the filament-to-filament distance of a layer at the one or more frangible regions is larger than two times a filament diameter, more preferably larger than three times a filament diameter, even more preferably larger than four times a filament diameter .

Optionally, the filament-to-filament distance within a layer at the one or more frangible regions is at least 50% larger, more preferably at least 100% larger and even more preferably at least 200% larger than a filament-to-filament distance of a layer at adjacent less-frangible regions of the porous structure.

The increased space between the neighboring filaments can result in a zone with reduced mechanical properties enabling easy breaking. These weaker zones form the one or more frangible regions within the formed porous structure. The frangible region can extend over a plurality of layers.

Optionally, at the one or more frangible regions the filaments have a reduced diameter. In some examples, at least 5% less, preferably at least 10% less and even more preferably at least 20% less compared to the filament diameter of adjacent less-frangible regions.

Printing parameters which control the size of filaments can strongly affect the porosity. The one or more frangible regions can be formed by depositing the filaments with a reduced diameter with respect to filament diameters at (adjacent) less-frangible regions.

Optionally, an extrusion speed and/or a rate of material extrusion is changed during deposition of the one or more frangible regions. Additionally or alternatively, extrusion is carried out using a nozzle with a reduced diameter when compared to the nozzle used for producing the less-frangible regions.

The size of the filaments and thereby the porosity may be strongly affected by either a nozzle travel speed or extrusion speed or a combination thereof. Adjusting the mass flow rate of the material being extruded by adjusting the extrusion pressure and/or the extrusion screw or piston speed during extrusion.

Optionally, the one or more frangible connections are formed by depositing filaments with different material properties at the one or more frangible connections. A material having weaker material properties may be deposited at the one or more frangible regions of the porous structure.

Optionally, the method further includes drying the deposited porous structure, wherein the drying parameters are chosen such that spontaneous cracking along the one or more frangible regions is promoted. This cracking may take place during or after drying, and in various stages of the drying process.

Optionally, the drying is performed by means of microwave drying in which microwaves are directed towards the porous structure, but any other drying technique considered suitable by the skilled person may be used as well.

Microwave drying may provide an advantageous drying process in which a more uniform heating and breaking of the porous structure is obtainable.

Optionally, a plurality of parts are formed in the less-frangible regions of the porous structure, wherein the frangible regions are arranged between the parts for holding the parts together during manufacturing of the porous structure, wherein the method further includes breaking the frangible regions in order to separate the individual parts from each other.

In this way, a large number of parts can be printed simultaneously while having an improved and more constant printing quality as the frangible parts are to be removed later on. As such, the efficiency of the manufacturing of porous structures can be improved significantly.

Optionally, deposition is performed continuous. The deposition of the filaments can be a continuous process wherein one elongated strand is deposited in a predetermined arrangement. It will be appreciated that non-continuous deposition is also envisaged.

Optionally, a vibration unit is used for providing vibrations to one or more porous structures so as to facilitate breaking of the one or more frangible regions of the one or more porous structures under influence of the vibrations, wherein the one or more less-frangible regions remain intact under influence of said vibrations being applied.

The vibrations may provide loads which are sufficient for breaking off the one or more frangible regions of the porous structure. The breaking off may also proceed gradually when the vibrations are employed. In this way, the less-frangible regions of the porous structure can be recovered automatically and more easily. Different types of vibrations may be employed.

Optionally, the porous structure comprises at least two three-dimensional parts, preferably at least four, more preferably at least eight, even more preferably at least ten.

Various arrangement of three-dimensional parts in the porous structure are possible. The three-dimensional parts may form successive parts, one or more geometric shapes, etc.

Optionally, the one or more porous structures are guided to a conveyer belt configured to provide vibrations, wherein the conveyer belt is configured to provide vibrations for achieving break-off of the one or more frangible regions of the porous structure.

Optionally, the vibrations are provided by means of a vibrating table or sieve.

Optionally, the one or more porous structures are guided to a drum or a rotating sieve configured to provide vibrations for achieving break-off of the one or more frangible regions of the porous structure.

According to an aspect, the invention further provides for a three-dimensional porous structure obtained by extrusion of a build material, the porous structure having interconnected filaments of a build material in a predetermined arrangement in a plurality of consecutively stacked layers, wherein the build material comprises a viscous material composition comprising an inorganic particulate material, which build material is formed into filaments upon deposition, wherein the filaments of the consecutive layers are connected to one another at least at contact points between filaments of consecutive layers to obtain the porous structure with interconnected pores between the filaments, the filaments of the consecutive layers being at an angle to each other, wherein a plurality of less frangible regions are formed in the arrangement of filaments to form the plurality of three-dimensional parts, wherein the porous structure includes one or more preformed frangible regions in the arrangement of filaments between the plurality of three-dimensional parts, wherein the frangible regions connect adjacently positioned three-dimensional parts together, wherein the predetermined arrangement of interconnected filaments is configured such that the one or more frangible regions form structurally weakened zones of the porous structure such that the porous structure breaks along said one or more frangible regions under influence of a load and/or a stress which does not break the less-frangible regions in order to make the plurality of three-dimensional parts releasable under influence of the load and/or stress.

The one or more frangible regions can be arranged to form a weak portion which is configured to break or tear reliably when a breaking force is applied on the porous structure. The less-frangible regions can be arranged to withstand the breaking force and remain intact.

The printed porous structure may have one or more unweakened zones (cf. less-frangible regions) and one or more weakened zones (cf. frangible regions), such that the weakened zones will more likely break when a breaking load is exerted on the printed porous structure.

As porosity is increased locally within the porous structure, the strength of the porous structure at those locations can decrease. In this way, the porosity locally increased between at least a first portion and a second portion of the porous structure, can enable easy separation of the first and second portion by breaking the frangible connection. Furthermore, the printing quality can be enhanced, as the porosity can be better maintained.

The porosity thus influences the stiffness or elastic modulus (cf. Young modulus), which is a measure of rate of change of stress over strain, defining how much a material deforms in response to a given force. The strength refers to the maximum force that can be sustained before the structure fails. The strength at the one or more frangible regions is substantially lower than the strength at the one or more less-frangible regions.

Whether the filaments are aligned or staggered also impacts the mechanical properties of the porous structure. For instance, a porous structure with staggered filaments may have a lower elastic modulus than a porous structure with aligned filaments. For example, for a aligned filament arrangement, there can be a solid column from top to bottom of the porous structure, which exists because the filaments intersect at similar positions. This solid column can strongly resist compression. In contrast, for a staggered filament arrangement, the filaments may bend slightly and stress can be concentrated at hinge points.

Furthermore, the filament orientation can also influence the mechanical properties of the porous structure. For instance, a porous structure with a 0/90, 0/60/120 and 0/45/90/135 filament orientation may have different elastic moduli. It will be appreciated that other lay-down patterns are also envisaged, such as for example triangular, rectangular, hexagon, curved, zigzag patterns. These lay-down patterns can also influence the pore size. Local variations in one or more arrangement parameters can be introduced in order to define the one or more frangible regions within the porous structure.

Optionally, one or more frangible portions are provided completely surrounding a porous object to be manufactured (formed by less-frangible regions of the porous structure). Alternatively, the one or more frangible portions may extend merely over a part of the circumference of the porous object to be manufactured. A plurality of frangible regions may be arranged around one or more less-frangible regions of the porous structure.

Optionally, at least one frangible region forms a weakened bridge which can break upon application on a threshold load on the porous structure. By means of the frangible region a differing break strength can be obtained within the porous structure with respect to the less-frangible region(s). The frangible region can break or tear first, since it forms the weakest connection or link in the porous structure. This may effectively provide a predictive breaking line of the porous structure.

Optionally, a frangibility and/or a less frangibility in the porous structure is gradual. The frangibility and/or less frangibility can be obtained by means of the one or more frangible regions and one or more less-frangible regions. In some examples, by changing the arrangement of the deposited interconnected filaments, the one or more frangible regions can have different strengths, resulting in different frangibility. Variations in frangibility can be used for selectively and/or sequentially breaking off portions of the formed porous structure.

According to an aspect, the invention further relates to a three-dimensional porous structure obtained by continuous deposition of filaments, wherein the formed porous structure has less-frangible connections and frangible connections having a different interspace between the filaments, wherein the frangible connections are configured to enable breakoff of at least a first portion of the porous structure from at least a second portion of the porous structure along said one or more frangible connections. The invention also relates to a method of manufacturing such porous structure.

Cross sections of the less frangible regions, for example in height direction thereof or in any other direction, may have the same or similar dimensions, or the dimensions may vary. Cross sections of the less frangible regions, for example in height direction of the thereof or in any other direction, may have the same or a similar shape or may have varying shapes. This way for example, the three dimensional structure may contain less frangible regions in the shape of either a cylinder or a beveled cylinder, a pyramid or a truncated pyramid, a cube or a beveled cube, or any other shape. It shall be clear that a three dimensional porous structure may contain a combination of less frangible regions with varying shapes and/or dimensions.

Optionally, the less-frangible first portion and the less-frangible second portion are held together by a network of less-frangible connections.

According to an aspect, the invention provides for a part obtainable by the method according to the invention, or the structure of the invention, comprising open pores along an outer face of the part at positions between subsequent/adjacent filaments, wherein the porosity of the outer face is increased with respect to the porosity of the outer face of the larger non-broken structure with the one or more frangible regions.

Cross sections of the part, for example in height direction of the part or in any other direction, may have the same or similar dimensions, or the dimensions may vary. Cross sections of the part, for example in height direction of the part or in any other direction, may have the same or a similar shape or may have varying shapes. This way for example, parts may be obtained in the shape of either a cylinder or a beveled cylinder, a pyramid or a truncated pyramid, a cube or a beveled cube etc., but parts in other shapes may be produced as well.

Advantageously, the part may have an open porosity at its outer face. Additionally or alternatively, the porosity may be substantially the same at the outer face, and may no longer be reduced as a result of bends and turns in the print path. In some examples, the outer faces or planes of the part can have the same porosity as inside of the structure (cf. cross section). However, variations in the porosity may be possible.

In some examples, the porosity of the part can be improved at least at side faces of the stacked layers. Also the total porosity of the porous structure can be increased.

One aspect which does no fall under the scope of the claimed invention further provides for an additive manufacturing system adapted to perform the method according to the invention.

Different types of extrusion additive manufacturing arrangements can be employed, for example filament-fed extrusion, screw extrusion or a syringe extrusion. A combination of these technologies is also possible.

The additive manufacturing method of this invention may also be referred to as 3D printing, 3DFD, fibre deposition, filament deposition, robocasting, micro-extrusion etc., or a combination of two or more of these.

In syringe extruders material can be placed into a syringe and the printer can depress the plunger at a controlled rate to extrude filaments through a nozzle. The syringes may for example be filled with a viscous material. In some examples, additionally a heated jacket can be used for heating the syringe to melt the material (e.g. polymer filaments or granules) in situ before printing. Different types of syringe extrusion systems are possible. A pneumatic pressure can be applied to the plunger. Alternatively, the plunger can be depressed by means of a mechanical displacement for instance achieved by means of an electric motor. Mechanical displacement may allow for more direct control over the volumetric extrusion rate whereas in pneumatic printers, the extrusion rate may additionally depend on an interplay between needle geometry, material viscosity, pneumatic pressure, and obstruction by previously extruded filaments. Other alternative designs are also possible.

In screw extruders a material can be fed into a screw that is surrounded by a close-fitting sleeve, called a barrel. As the screw rotates, material can be forced through the nozzle at the end of the barrel. The rate of material extrusion from the nozzle can depend on the screw rotation speed. Screw extruders can accommodate materials in paste form, however, for example polymer granules can also be used.

Filament-fed extruders may use reels of filaments fed into a heated melting chamber which is attached to a nozzle. The rate of material extrusion from the nozzle can depend on the rate at which the filament is fed off the reels into the melting chamber. Additive manufacturing software may control the extrusion rate based on the desired diameter of extruded filaments and the speed at which the nozzle is moving.

Various systems can be used for performing the extrusion based additive manufacturing method according to the invention.

According to an aspect, the invention relates to a computer implemented method for printing a porous structure. The computer implemented method may be configured to operate an additive manufacturing system to perform the steps of the printing method according to the invention. Optionally, the computer implemented method includes the steps of:
- receiving a model of a porous object to be manufactured, and
- define a print path depending on desired characteristics of the porous object, wherein in the print path one or more additional frangible regions are introduced with respect to one or more less-frangible regions having a shape and dimensions corresponding to that of the received model of the object to be manufactured.

The received model may for instance be a 3D representation of the object to be printed. One or more frangible regions may be additionally introduced in order to improve the printing quality.

Optionally, the one or more frangible regions are introduced along a periphery of the received model. The periphery may extend along outer edges of plurality of stacked layers.

Optionally, a plurality of porous objects are printed simultaneously by extruding a single porous structure, wherein the plurality of objects are separated from each other after printing by removing the one or more frangible regions from the less-frangible regions of the porous structure. The plurality of porous objects may be different. However, it is also possible that the a number of same porous objects are formed in the porous structure with frangible regions therebetween. The less-frangible regions of the porous structure may form the porous objects being manufactured.

The method may further comprise, prior to depositing the layer of filaments, determining the predetermined arrangement of the filaments, wherein the at least one of a: filament-to-filament distance, filament diameter, material, inter-filament properties, and intra-filament properties at the frangible connections to be formed is adjusted for forming the one or more frangible regions in addition to the one or more less-frangible regions of the porous structure. In an example, the one or more frangible regions are arranged to enable breakoff of at least a first portion of the porous structure from at least a second portion of the porous structure along one or more frangible connections of the one or more frangible regions.

According to an aspect, the invention provides for a filament placement strategy in an extrusion system for additive manufacturing of a porous structure, wherein the filament placement strategy is configured to include one or more frangible regions and one or more less-frangible regions in the porous structure, wherein the porous structure is configured such that under a predetermined threshold load the porous structure breaks along the one or more frangible regions whilst the one or more less-frangible regions remain intact. By carefully designing the arrangement of the filaments, one or more frangible connections can be obtained. These frangible regions may be purposely weakened zones in the porous structure.

Optionally, a material extrusion additive manufacturing process is employed in which a material is deposited continuously in a chosen arrangement.

The frangible regions may form splitting segments of the porous structure which can become detached when the frangible regions become severed. The frangible region may be of a variety of types, such as for example a bridge element, a frangible link, a frangible bridge portion, a frangible zone of reduced thickness, a weakened material, a weakened link, e.g. joining two less-frangible regions of the porous structure, an interruption in the porous structure forming a weakened portion, breakable bridge elements, severable ribs, material webs, etc. The frangible region may be obtained by a weaker structural arrangement of the filaments. Additionally or alternatively, the frangible region may have smaller dimensions in order to more easily break or tear (in a predictable manner) than the less-frangible regions of the porous structure. It is also conceivable to provide segments of different material within the porous structure which more easily tear or break under load or stress than the less-frangible regions of the porous structure being made of a different build material.

It will be appreciated that the extruded filament may also be known in the art as a strut, fibre/fiber, rod, raster, extrudate, and other terms.

It will be appreciated that the term filament diameter may be understood as a characteristic length of a cross section of the filament being deposited. Other terms may also be used for this feature, such as for example, filament width, fiber diameter, filament size, strut width, etc. The filaments may have various cross section shapes.

It will be appreciated that the layer thickness can be seen as a layer height or slice thickness. It represents a z-increment when 3D printing the porous structure.

The build material provided to be extruded in the form of filaments may contain a wide range of materials, with a vast range of different properties. The build material may contain at least one particulate material. Examples of suitable particulate materials are metals, composites, ceramics, natural materials, etc. Various other examples are also envisaged.

Different materials may result in different mechanical properties. Hence, the print path may depend on the specific material used during deposition.

Examples of particulate materials that can be used in the extrusion based additive manufacturing process, include ceramic materials (e.g. alumina, zirconia, silica, silicon carbide, silicon nitride, etc.), composite materials (e.g. polymer ceramic composites), metals (RVS, titanium, copper, aluminum, silver, .etc.) zeolites, metal organic frameworks, carbon, graphene, etc.

The build material may further contain at least one binder and/or one or more solvents, so as to ensure a desired viscosity.

Suitable solvents include water or an organic solvent, an ionic liquid or a mixture of two or more hereof. In a preferred embodiment the solvent may comprise one or more solvents selected from the group of water, an alkanol, a ketone, an ether or a mixture of two or more hereof, more preferably one or more solvents selected from the group of deionized water, ethanol, isopropyl alcohol, acetone, or a mixture of two or more hereof.

Where the build material contains at least one binder, said at least one binder component can be an inorganic or an organic compound or a mixture of one or more inorganic and one or more organic compounds. The binder may be of a more hydrophilic or a more hydrophobic nature. Preferably, said at least one binder is an organic compound, more preferably an organic compound capable of modifying the rheology or flow properties of the paste composition under the influence of pressure.

It will be appreciated that the porosity may represent a pore (volume) fraction. The pore width or pore size in the porous structure may define the porosity at a location or region of the porous structure. Local variations of the porosity can be used for forming one or more frangible regions or connections.

### BRIEF DESCRIPTION OF THE DRAWING

The invention will further be elucidated on the basis of exemplary embodiments which are represented in a drawing.

In the drawing:
Fig. 1 shows a schematic diagram of an extrusion process;
Fig. 2 shows a schematic diagram of embodiments of a porous structure;
Fig. 3 shows a schematic diagram of an embodiment of a porous structure;
Fig. 4 shows a schematic diagram of an embodiment of a porous structure;
Fig. 5 shows a schematic diagram of an embodiment of a porous structure;
Fig. 6 shows a schematic diagram of an embodiment of a porous structure;
Fig. 7 shows a schematic diagram of an embodiment of a porous structure;
Fig. 8 shows a schematic diagram of embodiments of a porous structure;
Fig. 9 shows a schematic diagram of embodiments of a porous structure;
Fig. 10 shows examples of printed samples;
Fig. 11 shows a graph of crush force in function of mass for various examples; and
Fig. 12 shows a schematic diagram of a method of printing a three-dimensional porous structure.

### DETAILED DESCRIPTION

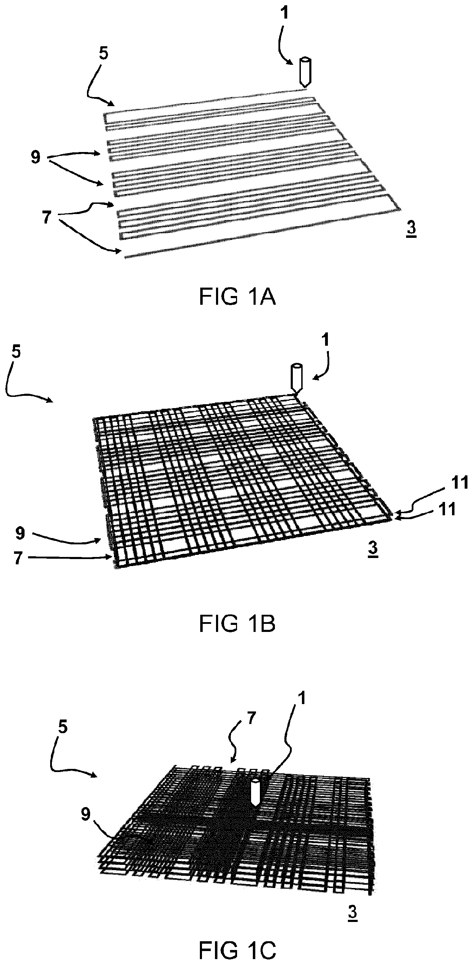

Fig. 1 shows a schematic diagram of a print path in an extrusion process for manufacturing a three-dimensional porous structure 1. The print path illustrates how the filaments of the porous structure are deposited on the plurality of layers. The method includes depositing interconnected filaments in a predetermined arrangement in a plurality of stacked layers. The filaments of the consecutive layers are connected to one another to obtain the porous structure with interconnected pores. Furthermore, filaments of the consecutive layers are angled with respect to each other. The filaments are extruded in such a way that one or more preselected frangible regions are formed in the arrangement of filaments. The filaments are deposited such that the one or more frangible regions of the porous structure are connected to one or more less-frangible regions of the porous structure. The predetermined arrangement of interconnected filaments is configured such that the one or more frangible regions form structurally weakened zones of the porous structure such that the porous structure breaks along said one or more frangible regions under influence of a load.

In this example, the one or more frangible regions are obtained by following a specific print path. The predetermined arrangement of interconnected filaments are configured such that the one or more frangible regions form structurally weakened zones of the porous structure such that the porous structure breaks along said one or more frangible regions under influence of a load.

In this example the structurally weaker zones are obtained by reducing the density of material at the frangible regions. At these breakable regions, the porosity is increased by increasing the filament-to-filament distance between adjacent filaments.

In the extrusion process, a nozzle 1 is scanned along a print bed 3 depositing filaments following the shown print path 5. It will be appreciated that it is also envisaged that the print bed 3 is moved instead of the nozzle 1 (kinematic inversion). A combination is also possible. In an alternative example, both the nozzle 1 and the print bed 3 can be moved during at least portions of the deposition process. In this example, the print path 5 defines the frangible regions 7 and less-frangible regions 9 extending over the plurality of layers 11.

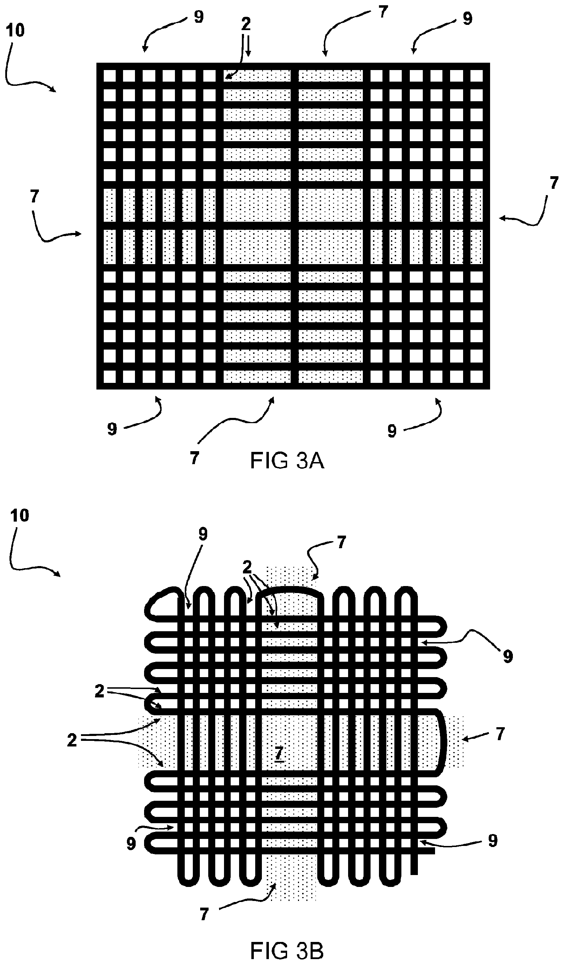

In fig. 1a, the print path 5 for the first layer on the print bed 3 is shown. In fig 1b, the print path 5 of the two layers are shown. In fig. 3b, the print path 5 is shown in which the fourth layer has not been finished yet. It will be appreciated that large variety of print path arrangement are possible for defining the one or more frangible regions in the porous structure to be manufactured.

By altering the deposition pattern, the local mechanical properties of the porous structure are locally changed, so that anticipated break lines can be formed along which the porous structure can break when a breaking load is applied. In this example, the porous structure being printed has a nonhomogeneous filament-to-filament distance (interspacing). As explained above, the local mechanical strength at the one or more frangible regions can also be achieved in a different way.

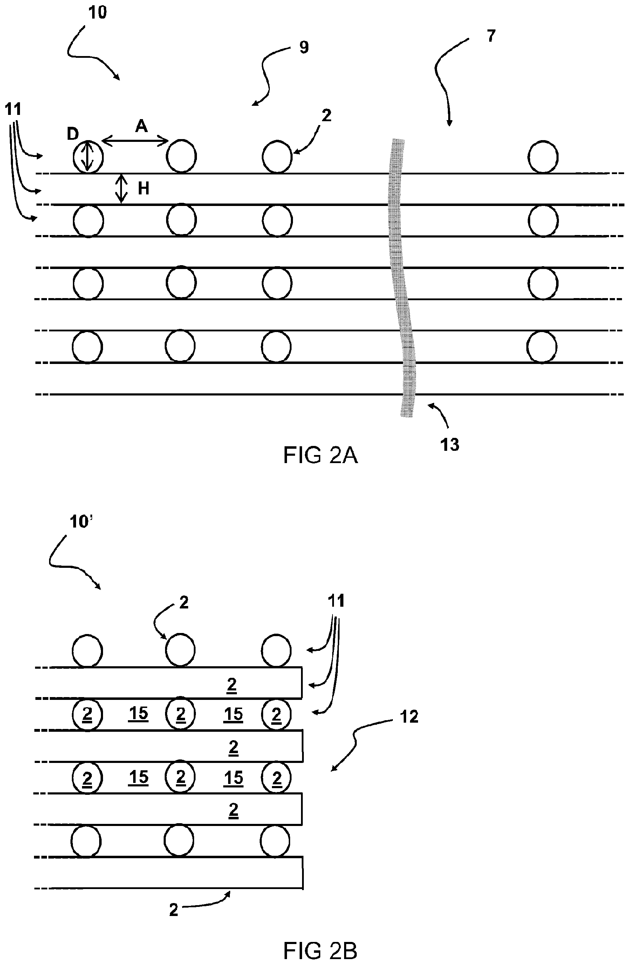

Fig. 2 shows a cross sectional side view of a schematic diagram of an embodiment of a porous structure 10 with a plurality of layers 11 of deposited filaments 2 stacked on each other. The filaments 2 have a filament diameter D and a filament-to-filament distance A. In this example, the filament-to-filament distance A is varied in the filament arrangement in order to form the frangible region 7. In this frangible region the filaments have limited structural support and are more prone to breaking when a load is applied on the porous structure. For instance, by means of a flexural force or bending force the frangible region 7 can break off in one or more smaller pieces. The broken off pieces can be then removed from the porous structure in order to only retain the less-frangible portions 9 of the porous structure. The less-frangible regions 9 has filaments deposited in an arrangement providing sufficient mechanical properties in order to withstand the loads exerted on the porous structure for removing the frangible regions 7. In this way, the porous structure has an anticipated breaking portion running along the frangible region. An exemplary initial breaking line 13 is illustrated in fig. 2a.

A layer may have a height H. This height may correspond substantially to the filament diameter D. However, variations are also possible. For instance a height H may be reduced to create stronger interconnections with the filaments of the previous layer.

A build material can be extruded in the form of a first layer, the first layer including a plurality of filaments 2. The filaments 2 may for instance be part of an elongated strand of deposited build material. In an example, the elongated strand is deposited continuously. Furthermore, one or more additional layers can be extruded, each additional layer being vertically stacked upon a previously extruded layer and also comprising a plurality of filaments 2 angled with respect to a number of filaments 2 of the previous layer. A predetermined pattern is dispensed so as to define the three-dimensional object being manufactured.

The frangible regions 7 have a reduced flexural strength and/or reliability in bending, resulting in breaking there along when a breaking load is exerted on the porous structure 10.

After removal of the one or more frangible regions 7 of the porous structure 10, only the less-frangible regions 9 of the porous structure 10 remain intact. The resulting porous structure 10' with the frangible regions being removed is illustrated in fig. 2b. The frangible regions 7 can be easily broken off and removed without damaging the less-frangible regions 9 of the porous structure 10. The less-frangible region 9 remaining intact in the porous structure may form a desired shape of the porous structure to be manufactured. The edges include a plurality of broken off filaments 2. Advantageously, as a result, the porosity at the outer periphery 12 can be better guaranteed.

The porous structures 10 and 10' have pores 15 which are interconnected such that mass transfer for a wide range of applications can be ensured. The geometry and arrangement of the filaments 2 affect the porosity and the mechanical properties of the porous structure. The position and orientation of filaments 2 in the filament arrangement, i.e. lay-down pattern obtained by deposition along the print path, is adapted to form one or more frangible regions 7 in the porous structure 10. The filament-to-filament distance A (interspace) is adapted to implement weakened regions in the porous structure 10. The mechanical properties can be affected by the relative orientation of filaments 2 across multiple layers 11.

In some embodiments, the porous structure is configured to have a filament-to-filament (interspace) distance in the frangible region in a range of 1.5 to 4 times the filament-to-filament distance in the less-frangible region.

In some embodiments, the porous structure is configured to have a filament-to-filament (interspace) distance in the less-frangible region in a range of 0.1 to 6 times the filament diameter, more preferably in a range of 0.2 to 5.

In continuous extrusion of the filaments, a turn in the filament print path may result in a lower porosity (e.g. at an outer end or face of the porous structure). In some cases the porosity can be significantly reduced at the turning position. Advantageously, this detrimental porosity reduction can be resolved if the deposited filaments at these turns are broken off, thereby providing extra porosity.

Fig. 3 shows a top view of schematic diagram of embodiments of a porous structure 10. As an example two layers stacked on each other are shown. Weaker portions (cf. frangible regions 7) are defined in the porous structure 10 configured to be breakable, wherein under influence of a breaking force the breaking surface runs along the one or more frangible regions. The less-frangible regions 9 have mechanical properties such that they can remain intact under the same breaking force. For instance, the porosity may be increased (and/or material density decreased) in order to purposely locally weaken the porous structure 10 at the one or more frangible regions 7 with respect to the less-frangible regions 9 of the porous structure 10.

In fig. 3a, the filaments 2 are printed at 0° in a first layer and 90° in a second successive layer. The filaments 2 are deposited in straight lines, but other configurations or paths are also possible. The specific deposition of the filaments introduces weak spots in the porous structure which correspond to the frangible regions 7. In this example, these weak spots are connected to less-frangible regions 9. Hence, less-frangible regions 9 of the porous structure 10 can be held together by means of the frangible regions 7. When the porous structure is broken along the one or more frangible regions in order to remove the frangible regions from the porous structure, a number of separate porous structures can be obtained representing the remaining less-frangible regions of the initial porous structure 10. It is possible to print a larger number of porous objects incorporated in the initially printed porous structure 10. The porous objects can be separated by removing the frangible regions 7 in the porous structure 10.

The strength of the frangible regions 7 of the porous structure 10 have a different mechanical strength resulting from a different filament-to-filament distance. As a result of the variation in the filament-to-filament distance in the frangible regions 7 of the porous structure 10, a stepwise break-off of the frangible regions 7 can be allowed. For instance, a first load and/or stress can be applied for breaking off first frangible regions, followed by an increased second load and/or stress for breaking off remaining second frangible regions.

In fig. 3b the filaments 2 are deposited in an alternative arrangement. A top view is shown of two layers stacked on each other by material extrusion. The porous structure has interconnected filaments 2 in a predetermined arrangement. The porous structure may have a larger number of layers. The filaments 2 of the consecutive layers are connected to one another to obtain the porous structure with interconnected pores, wherein the porous structure includes one or more preformed frangible regions 7 in the arrangement of filaments. The one or more frangible regions 7 are connected to less-frangible regions 9 of the porous structure 10. The predetermined arrangement of interconnected filaments is configured such that the one or more frangible regions 7 form structurally weakened zones of the porous structure such that the porous structure 10 breaks along said one or more frangible regions 7 under influence of a load.

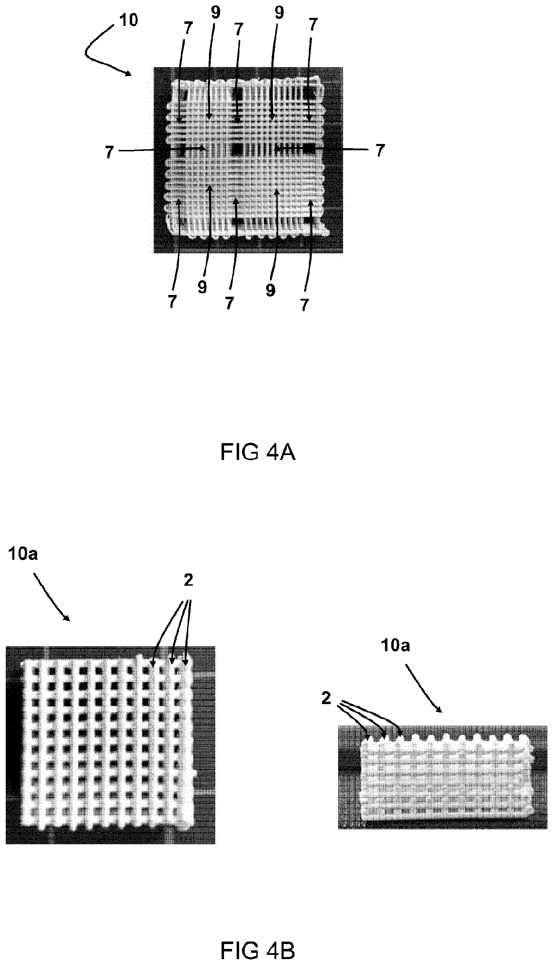

Fig. 4 shows a schematic diagram of an embodiment of a porous structure. In fig. 4a, the porous structure 10 comprises a plurality of frangible regions 7 and a plurality of less-frangible regions 9. The frangible regions 7 are easily removable from the porous structure 10 without substantially damaging the less-frangible regions 9. As the frangible regions provide weakened mechanical properties in the porous structure 10, the formed porous structure 10 will break along said frangible regions 7 when a sufficiently large force is applied on the porous structure 10. The less-frangible regions 9 are substantially stronger than the frangible regions, such that the frangible regions 7 can be broken off and removed without damaging the less-frangible regions 9. Hence, the breaking lines can be anticipated beforehand.

After removal of the frangible regions 7, distinct parts of the porous structure will remain intact corresponding to the less-frangible regions 9 of the initial porous structure 10. A part 10a of the porous structure is shown in fig. 4b in top view (left) and side view (right). In this way, the printing quality can be enhanced. Furthermore a larger number of porous parts or objects 10a can be manufactured in a single printing process, such that the efficiency can be improved.

It will be appreciated that a different lay down pattern may be employed. By controlling the lay down architecture of the porous structure 10, the local mechanical properties can be influenced. In general, highly porous structures exhibit limited mechanical properties whereby a power-law exists relating porosity to compressive stiffness.

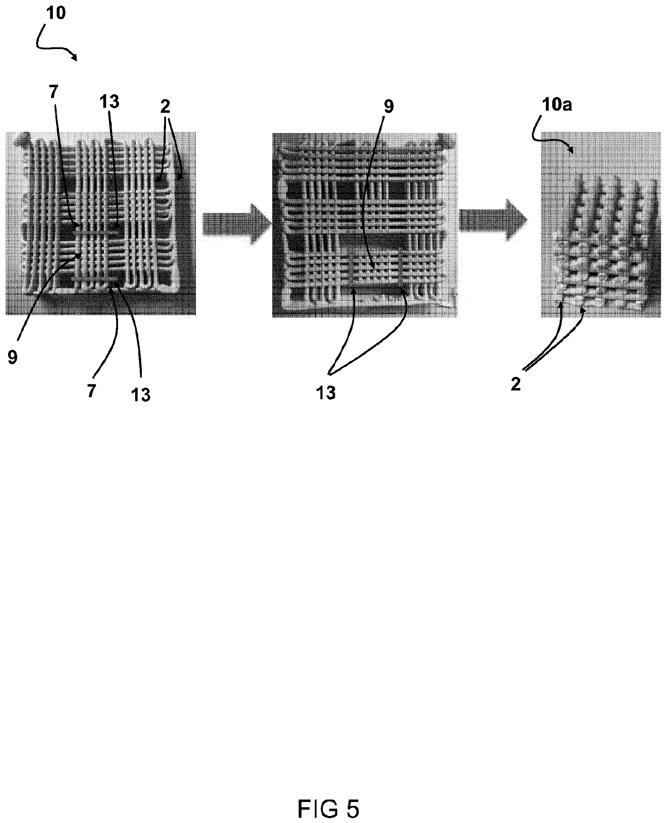

Fig. 5 shows a schematic diagram of an embodiment of a porous structure 10. A plurality of parts 10a (cf. porous objects) are formed by the less-frangible regions 9 of the porous structure 10. The frangible regions 7 are arranged between the parts 10a for holding the parts 10a together during manufacturing of the porous structure 10. The frangible regions 7 connected to the less-frangible regions are broken and removed in order to separate the individual parts 10a from each other. The breaking lines run along the frangible regions 7 and can be easily anticipated. Furthermore, the outer periphery of the parts 10a can have a better porosity than the case in which the parts 10a would have been printed separately. A reduced porosity at the edges of the parts 10a as a result of turn loops or artifacts during printing or extrusion can be avoided.

Advantageously, an open porosity can be obtained on side faces or internal faces for improved printability and/or printing quality of the remaining porous structure with the less-frangible regions being isolated from the frangible regions. Hence, the extrusion based 3D printing process can form porous structures with controlled porosity at the side face (e.g. a face oriented differently from the layer-by-layer 3D printing direction, XY printing direction).

In some examples, the mechanical strength of the frangible regions within the porous structure may vary in order to allow a stepwise break-off of various portions of the porous structure upon applying increasing loads and/or with increasing stresses.

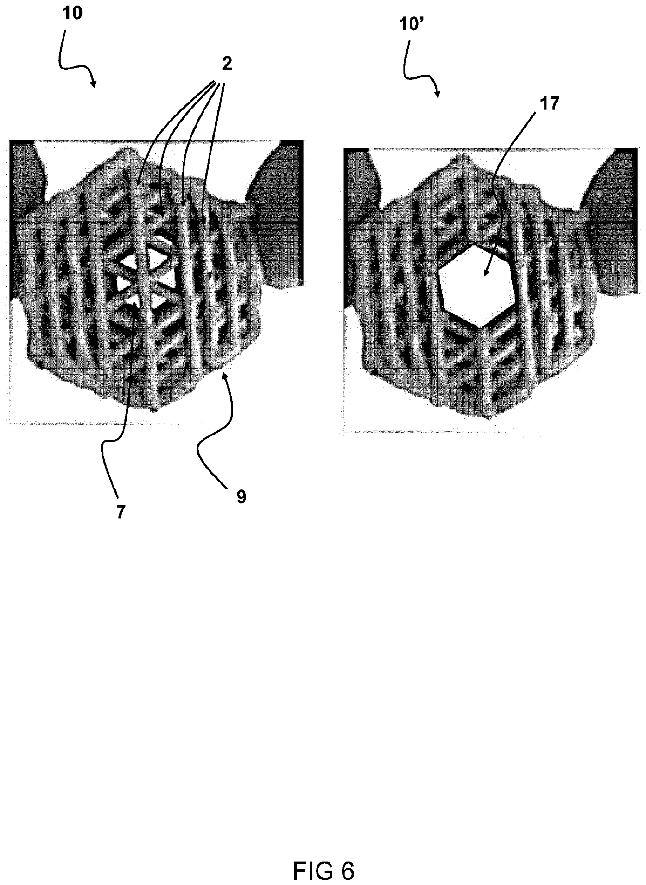

Fig. 6 shows a schematic diagram of an embodiment of a porous structure 10. The filaments 2 of the porous structure 10 are arranged such that a frangible region 7 is formed in a central portion. This weakened zone can be broken off easily and removed while the risk of damaging the less-frangible regions 9 is reduced. In this way, a resulting porous structure 10' is obtained with an empty space 17 formed therein.

The design inputs may be manipulated in order to include additional less-frangible regions 9 in the porous structure 10, wherein one or more less-frangible regions 9 correspond to porous objects to be manufactured based on a received model to be printed. By incorporating the one or more frangible regions 7 in the porous structure 10 a predictive insight to the break lines or break surfaces can be obtained.

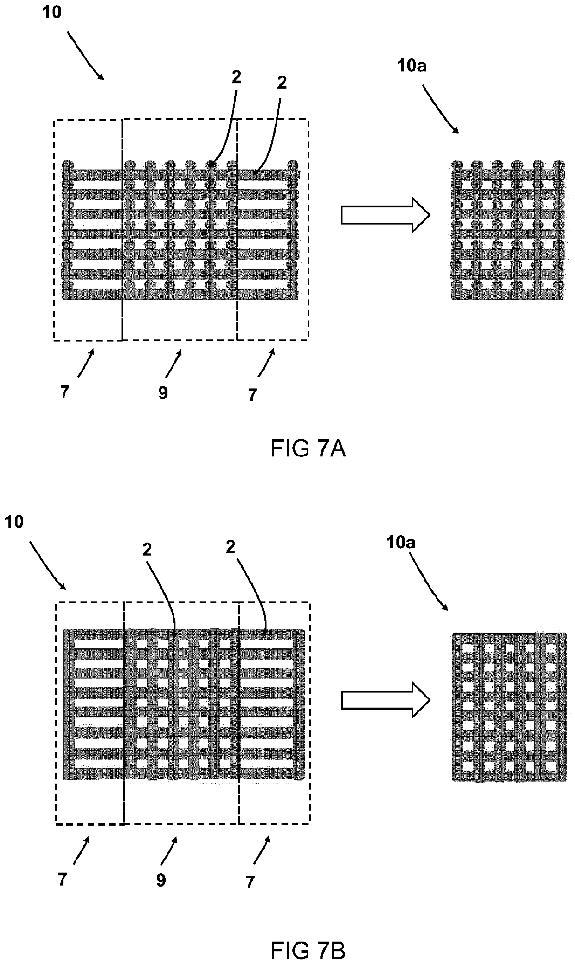

Fig. 7 shows a schematic diagram of an embodiment of a porous structure 10 including frangible regions 7 and a less-frangible regions 9. Fig. 7a shows a cross sectional side view and fig. 7b shows a cross sectional top view.

At the one or more frangible connections 7 a mechanical weakness is introduced such as to be able to anticipate breaking of the porous structure 10 there along. The porous structure 10 can break or tear along the one or more frangible regions 7 when a threshold load for breaking these one or more frangible regions 7 is reached.

A load is applied on the porous structure 10 in order to break the porous structure 10 along the one or more frangible regions 7, after which the broken off material can be removed from the porous structure 10. The resulting part 10a that is obtained can be free of frangible regions 7. The porosity at the periphery can be better guaranteed and also the shape may correspond more to the desired shape of the end product.

For printing a porous object, one or more frangible regions 7 may be additionally added to the design of porous object to be manufactured for avoiding printing, printing inaccuracies, printing anomalies or edge effects. For instance, surface grinding in order to eliminate edge effects is no longer needed when one or more frangible regions 7 are added surrounding the porous object in the porous structure. The one or more frangible regions 7 can extend along at least an external periphery of the desired shape of the porous object to be manufactured. In this way detrimental cutting operations carried out on the formed porous object can be avoided. The frangible regions 7 can simply be broken off from the less-frangible regions 9 of the porous structure 10 in order to obtain the porous objects to be manufactured. More porous surfaces can be obtained along the outer periphery (cf. side of the stacked layers) of the printed porous objects.

Optionally, at least one frangible portion forms a closed circumference of the porous structure. The frangible regions can effectively form the weakest links for the porous structure. The frangible regions can be arranged to become fractured by a mechanical load, such as for example a flexural or bending breaking force, during removal of the frangible regions.

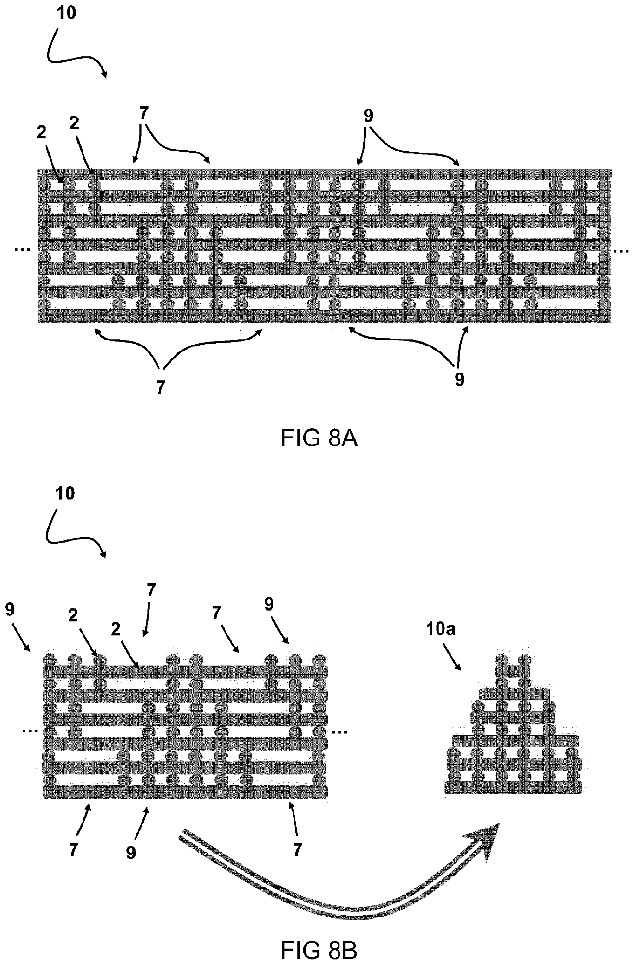

Fig. 8 shows a schematic diagram of embodiments of a porous structure 10 including a plurality of frangible regions 7 and less-frangible regions 9. In this example, a number of pyramid shaped less-frangible regions are defined in the porous structure connected to each other via a plurality of frangible regions 7. The pyramid shaped less-frangible regions are alternatingly positioned upside down. This can result in significant space saving and less material may be needed to print the same amount of individual parts within the porous structure 10. It will be appreciated that a wide variety of other shapes may be formed.

The one or more frangible regions 7 can hold multiple parts of the porous structure 10 together during deposition of the filaments 2. However, they can act as predefined mechanical weak zones or defects which are arranged to break under load to result in a porous structure 10 with only the less-frangible regions 9 of the porous structure 10 remaining intact. In this way, break lines can be better predicted or anticipated.

When the frangible regions 7 have been removed from the porous structure, a plurality of pyramid shaped objects 10a are obtained. The frangible regions 7 can be broken easily from the less-frangible regions 9, wherein the risk of damaging the less-frangible regions is reduced in the process.

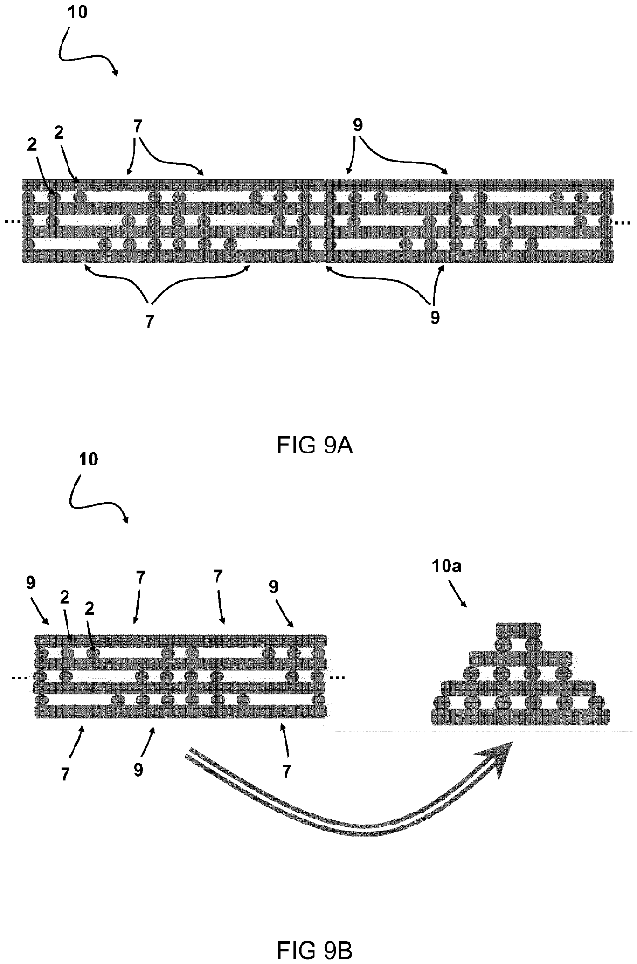

Fig. 9 shows a schematic diagram of embodiments of a porous structure 10 with frangible regions 7 and less-frangible regions 9. Similar to the embodiment shown in fig. 8, a plurality of parts are formed in the less-frangible regions 9 of the porous structure 10, wherein the frangible regions 7 are arranged between the parts for holding the parts together during manufacturing of the porous structure 10. The method further includes breaking the frangible regions in order to separate the individual parts 10a from each other. In this example, the individual parts 10a are also pyramid shaped, however other shapes can also be formed. Many variants of three-dimensional shapes are possible, for instance spheres. It is also possible to manufacture a sphere within a sphere employing the method according to the invention.

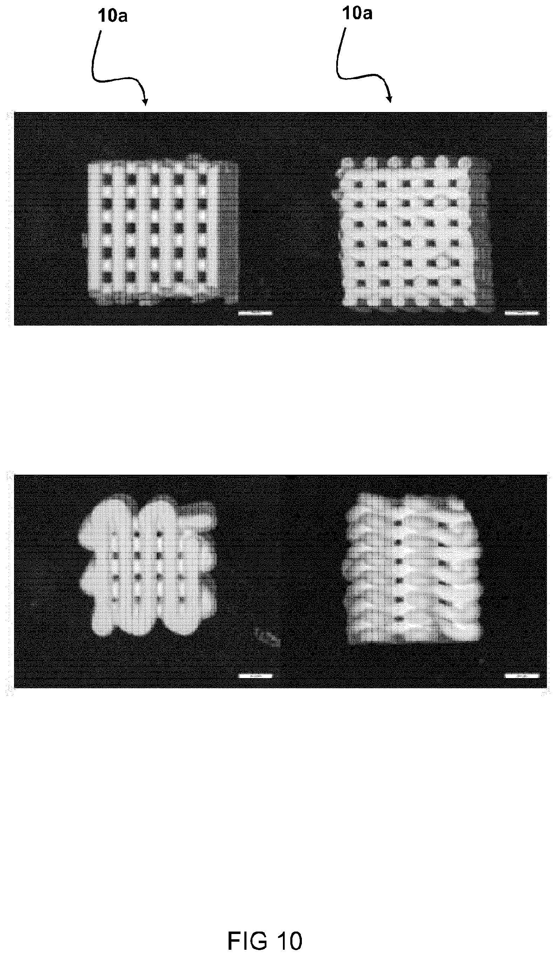

Fig. 10 shows examples of printed samples. The samples shown on the top row illustrate the resulting part 10a that is obtained, free of frangible regions 7. The frangible regions 7 have been removed by applying a force/load on the printed porous structure. As can be seen, the porosity at the periphery can be better guaranteed and also the shape may correspond more to the desired shape of the end product compared to the samples being prepared by continuous printing as shown in the bottom row of the figure. The left column shows a top view, and the right column shows a side view of the printed samples using the frangible regions according to the invention (top row), and using the conventional method (bottom row).

In this example, individual three-dimensional porous parts of alumina were printed having similar dimensions (8.0 x 8.0 x 8.5 mm) using a 800 µm nozzle and calcined at 850 °C. In this way a comparison could be made between the three-dimensional parts obtained using the method according to the invention, and the conventional method of using continuous printing (prior art).

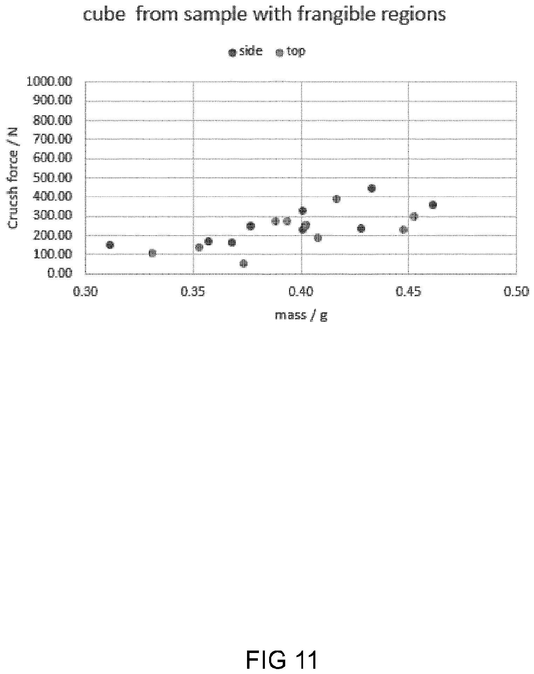

Fig. 11 shows a graph of crush force in function of mass for various examples. The force needed to crush the samples was measured in 2 directions: along z-axis op printed sample (top) and on the x or y axis of the printed sample (side). The samples have the same average weight (0,40 ± 0,05 g) and dimensions but the porosity is different.

The sample made using frangible regions has an uniform porosity distribution and 6 fibres in each layer, all 6 parallel to each other.

Of each shape 10 structures were crushed along the z-axes and ten samples along either X or Y directions. The sample prepared using the frangible ranges had similar strengths in both directions surprisingly. The strength being similar to the lower value of the standard cube while the porosity on the sides is much higher.

Some experiments even show that the samples prepared by frangible regions (by employing the method according to the invention) can result in a 33 % increase in strength. This surprising effect provides significant advantages. Below a table is provided with results obtained by performing experiments on printed samples using the method according to the invention and the known method of continuous printing:

**Table 1: experimental results of the strength of printed structures**

| | Continuous printing | | Method of invention (frangible regions) | |
|---|---|---|---|---|
| | top | side | top | side |
| Average | 530 N | 236 N | 257 N | 221 N |
| Stdev | 130 N | 63 N | 93 N | 100 N |
| Max | 774 N | 372 N | 443 N | 392 N |
| Min | 369 N | 156 N | 151 N | 54 N |

In some alternative experiments, for continuous printing a result of 293 N was measured (for 'side'), whilst the method according to the invention resulted in 357 N (for 'side').

The table below provides additional experimental results. Particularly advantageous results are underlined and indicated in bold letters.

**Table 2: experimental results for various exemplary printed parts**

| | 1200µm nozzle | 800µm nozzle | 1200µm nozzle | 800µm nozzle | 800µm nozzle | 800µm nozzle | 800µm nozzle | 600µ nozzle |
|---|---|---|---|---|---|---|---|---|
| | Hexagon "break" | Cube "break" | Cube "break" | Cube no perimeter | Octagon no perimeter | Octagon with perimeter | Hexagon no perimeter | Cube "break" |
| PABD (g/ml) | 0.36 | **0.45** | **0.45** | **0.60** | 0.62 | 0.67 | 0.67 | 0.86 |
| SCS (N) | 79 | **357** | **269** | **93** | 200 | 104 | 93 | 212 |

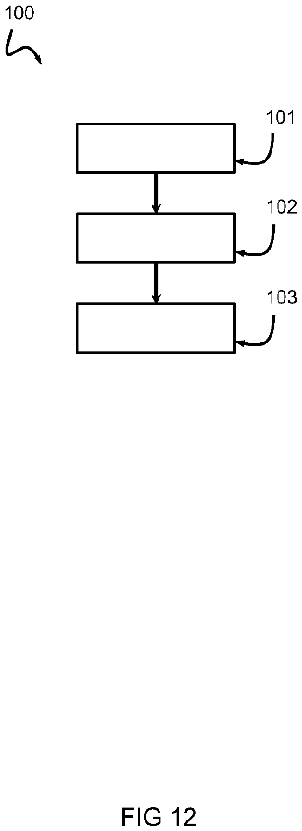

Fig. 12 shows a schematic diagram of a method of printing a three-dimensional porous structure 100. In a first step 101, a model is received of a porous object to be manufactured. In a second step 102, a print path is defined based on the received model and depending on desired characteristics of the porous object. In a third step 103, the printing path is adjusted to add one or more frangible regions, for instance along a periphery of the received model. The periphery may extend along outer edges of plurality of stacked layers. In this way, the printing quality may be improved. It will be appreciated that the second step 102 and third step 103 may be carried out in a single step.

For additive manufacturing of a porous structure, a three dimensional model may be generated. This model can be imported into additive manufacturing software, which controls the overall deposition strategy used to produce the porous structure. Exemplary parameters which can be controlled are print path, nozzle travel speed, temperature, etc. The porous structure can then be manufactured by depositing the filaments according to the predetermined arrangement in a plurality of stacked layers. According to the invention, the porous structure being extruded includes one or more frangible regions connected to one or more less-frangible regions. The frangible regions may have a smaller material density than the less-frangible regions, resulting in locally reduced mechanical strength. In this way, the breaking of the porous structure can be guided along the one or more frangible regions.

The porous structure can be produced layer-by-layer in various ways. Although the embodiments in the figures show flat layers wherein all filaments are extruded for a single layer (with the nozzle at a constant height above the print bed) before the nozzle moves up by the layer thickness to begin printing the next layer, it is also envisaged that curved layers are printed by changing the distance between the nozzle and the print bed during the deposition of a single filament. By moving the nozzle away and closer to the print bed during said deposition, a curved shape can be obtained.

The mechanical strength may include different types of local strengths of the porous structure. For instance, the mechanical strength can be a flexural strength. Flexural strength may also be a bend strength or transverse rupture strength. It can be defined as the stress in a region of the porous structure just before it yields in a flexure test. The flexural strength can represent the highest stress experienced within the material at its moment of yield. In other examples, additionally or alternatively, the weaker mechanical strength at the one or more frangible regions is represented by a shear strength or a compressive strength.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The mere fact that certain measures are recited in mutually different claims does not indicate that a combination of these measures cannot be used to an advantage.

## Claims

1. A method for simultaneously manufacturing a plurality of porous three-dimensional parts, by manufacturing a three-dimensional structure of the plurality of porous three-dimensional parts connected to each other, the method including depositing interconnected filaments (2) of a build material in a predetermined arrangement in a plurality of consecutively stacked layers (11), wherein the build material comprises a viscous material composition comprising an inorganic particulate material, wherein the filaments (2) of the consecutive layers (11) are connected to one another at least at contact points between filaments (2) of consecutive layers (11) to obtain the porous structure (10) with interconnected pores (15) between the filaments (2), the filaments (2) of the consecutive layers (11) being at an angle to each other, wherein a plurality of less frangible regions (9) are formed in the arrangement of filaments (2) to form the plurality of three-dimensional parts, wherein one or more preselected frangible regions (7) are formed in the arrangement of filaments (2) between the plurality of three-dimensional parts, and wherein the filaments (2) are deposited such that the one or more frangible regions (7) of the porous structure (10) are connected to the plurality of less-frangible regions (9), wherein the frangible regions (7) connect adjacently positioned three-dimensional parts together, wherein the predetermined arrangement of interconnected filaments (2) is configured such that the one or more frangible regions (7) form structurally weakened zones of the porous structure (10) such that the porous structure (10) breaks along said one or more frangible regions (7) under influence of a load and/or a stress which does not break the less frangible regions (9), in order to make the plurality of three-dimensional parts releasable under influence of the load and/or stress.

2. Method according to claim 1, wherein the one or more frangible regions are configured to break in a direction along a cross section of the filaments of the frangible regions which extends under an angle with respect to a longitudinal axis of said filaments forming said frangible regions.

3. Method according to claim 1 or 2, wherein the porous structure is subjected to a load to cause breaking of the porous structure along the one or more frangible regions connecting the plurality of the three-dimensional parts, the breaking resulting in a release of the plurality of the three-dimensional parts formed by the less frangible regions, wherein the separated plurality of three-dimensional parts are collected.

4. Method according to any one of the preceding claims, wherein the build material further comprises a solvent, in particular water and/or an organic solvent, and/or some organic material.

5. Method according to any of the preceding claims, wherein the build material is a viscous paste or a viscous suspension of the inorganic particulate material.

6. Method according to any of the preceding claims, wherein the inorganic material is catalytically active material or a sorbent material.

7. Method according to any one of the preceding claims, wherein the filaments are deposited in the predetermined arrangement with a reduced density of the porous structure at the one or more frangible regions, wherein the reduced density is achieved by at least one of : a reduced number of filaments per unit of length, filaments having smaller dimensions, in particular a smaller cross section, or filaments being produced from a build material having a lower material density.

8. Method according to any one of preceding claims, wherein the filaments are deposited in the predetermined arrangement with an increased porosity of the porous structure between the filaments at the one or more frangible regions.

9. Method according to claim 8, wherein the higher porosity is achieved by at least one of: filaments made of a build material with an increased solvent concentration, filaments made of a build material with less binder material, filaments made of a build material with a different binder material, filaments made of a build material with containing less particulate material.

10. Method according to any one of the preceding claims, wherein the filaments are deposited in the predetermined arrangement with an increased filament-to-filament distance at the one or more frangible regions, wherein the filament-to-filament distance of a same layer at the one or more frangible regions is at least 20% larger than the filament-to-filament distance in adjacent less-frangible regions, more preferably at least 200% larger than the filament-to-filament distance in adjacent less-frangible regions, even more preferably at least 400% larger than the filament-to-filament distance in adjacent less-frangible regions.

11. Method according to any one of the preceding claims, wherein different frangible regions with varying pre-selected frangibility are formed in the porous structure, wherein the different frangible regions are configured to break at different loads.

12. Method according to any one of the preceding claims, wherein at the one or more frangible regions the filaments have a reduced diameter when compared to the diameter of the filaments in the less-frangible regions.

13. Method according to any one of the preceding claims, wherein cross sections at varying positions of the one or more less frangible regions have a varying shape or varying dimensions or a combination thereof.

14. Method according to any one of the preceding claims, further including drying and/or calcining the deposited porous structure, wherein the drying and/or calcination parameters are chosen such that spontaneous cracking along the one or more frangible regions is promoted.

15. A three-dimensional porous structure (10) obtained by extrusion of a build material, the porous structure (10) having interconnected filaments (2) of a build material in a predetermined arrangement in a plurality of consecutively stacked layers (11), wherein the build material comprises a viscous material composition comprising an inorganic particulate material, which build material is formed into filaments (2) upon deposition, wherein the filaments (2) of the consecutive layers (11) are connected to one another at least at contact points between filaments (2) of consecutive layers (11) to obtain the porous structure (10) with interconnected pores between the filaments (2), the filaments (2) of the consecutive layers (11) being at an angle to each other, wherein a plurality of less frangible regions (9) are formed in the arrangement of filaments (2) to form the plurality of three-dimensional parts, wherein the porous structure (10) includes one or more preformed frangible regions (7) in the arrangement of filaments (2) between the plurality of three-dimensional parts, wherein the frangible regions (7) connect adjacently positioned three-dimensional parts together, wherein the predetermined arrangement of interconnected filaments (2) is configured such that the one or more frangible regions (7) form structurally weakened zones of the porous structure (10) such that the porous structure (10) breaks along said one or more frangible regions (7) under influence of a load and/or a stress which does not break the less-frangible regions (9) in order to make the plurality of three-dimensional parts releasable under influence of the load and/or stress.

## Patentansprüche

1. Verfahren zum gleichzeitigen Herstellen einer Vielzahl von porösen dreidimensionalen Teilen durch Herstellen einer dreidimensionalen Struktur der Vielzahl von porösen dreidimensionalen Teilen, die miteinander verbunden sind, wobei das Verfahren das Aufbringen von miteinander verbundenen Filamenten (2) eines Aufbaumaterials in einer vorgegebenen Anordnung in einer Vielzahl von aufeinanderfolgend gestapelten Schichten (11) einschließt, wobei das Aufbaumaterial eine viskose Materialzusammensetzung umfasst, umfassend ein anorganisches partikelförmiges Material, wobei die Filamente (2) der aufeinanderfolgenden Schichten (11) zumindest an Kontaktpunkten zwischen Filamenten (2) von aufeinanderfolgenden Schichten (11) miteinander verbunden sind, um die poröse Struktur (10) mit miteinander verbundenen Poren (15) zwischen den Filamenten (2) zu erhalten, wobei die Filamente (2) der aufeinanderfolgenden Schichten (11) in einem Winkel zueinander stehen, wobei eine Vielzahl von weniger zerbrechlichen Bereichen (9) in der Anordnung der Filamente (2) ausgebildet sind, um die Vielzahl von dreidimensionalen Teilen zu bilden, wobei ein oder mehrere vorgewählte zerbrechliche Bereiche (7) in der Anordnung der Filamente (2) zwischen der Vielzahl von dreidimensionalen Teilen ausgebildet sind, und wobei die Filamente (2) so aufgebracht sind, dass der eine oder die mehreren zerbrechlichen Bereiche (7) der porösen Struktur (10) mit der Vielzahl der weniger zerbrechlichen Bereiche (9) verbunden sind, wobei die zerbrechlichen Bereiche (7) benachbart positionierte dreidimensionale Teile miteinander verbinden, wobei die vorgegebene Anordnung von miteinander verbundenen Filamenten (2) derart konfiguriert ist, dass der eine oder die mehreren zerbrechlichen Bereiche (7) strukturell geschwächte Zonen der porösen Struktur (10) bilden, so dass die poröse Struktur (10) entlang des einen oder der mehreren zerbrechlichen Bereiche (7) unter Einwirkung einer Belastung und/oder einer Spannung bricht, welche die weniger zerbrechlichen Bereiche (9) nicht bricht, um die Vielzahl der dreidimensionalen Teile unter Einwirkung der Belastung und/oder Spannung ablösbar zu machen.

2. Verfahren nach Anspruch 1, wobei der eine oder die mehreren zerbrechlichen Bereiche konfiguriert sind, um in einer Richtung entlang eines Querschnitts der Filamente der zerbrechlichen Bereiche zu brechen, der sich unter einem Winkel in Bezug auf eine Längsachse der Filamente, welche die zerbrechlichen Bereiche bilden, erstreckt.

3. Verfahren nach Anspruch 1 oder 2, wobei die poröse Struktur einer Belastung ausgesetzt wird, um ein Brechen der porösen Struktur entlang des einen oder der mehreren zerbrechlichen Bereiche, die die Vielzahl der dreidimensionalen Teile verbinden, zu bewirken, wobei das Brechen zu einer Freisetzung der Vielzahl der dreidimensionalen Teile führt, die durch die weniger zerbrechlichen Bereiche gebildet werden, wobei die abgetrennte Vielzahl der dreidimensionalen Teile gesammelt wird.

4. Verfahren nach einem der vorstehenden Ansprüche, wobei das Aufbaumaterial ferner ein Lösungsmittel, insbesondere Wasser und/oder ein organisches Lösungsmittel, und/oder ein organisches Material umfasst.

5. Verfahren nach einem der vorstehenden Ansprüche, wobei das Aufbaumaterial eine viskose Paste oder eine viskose Suspension des anorganischen partikelförmigen Materials ist.

6. Verfahren nach einem der vorstehenden Ansprüche, wobei das anorganische Material ein katalytisch aktives Material oder ein Sorptionsmittel ist.

7. Verfahren nach einem der vorstehenden Ansprüche, wobei die Filamente in der vorgegebenen Anordnung mit einer verringerten Dichte der porösen Struktur an dem einen oder den mehreren zerbrechlichen Bereichen aufgebracht werden, wobei die verringerte Dichte durch mindestens einen der folgenden Punkte erreicht wird: eine verringerte Anzahl von Filamenten pro Längeneinheit, Filamente mit kleineren Abmessungen, insbesondere einem kleineren Querschnitt, oder Filamente, die aus einem Aufbaumaterial mit einer geringeren Materialdichte hergestellt werden.

8. Verfahren nach einem der vorstehenden Ansprüche, wobei die Filamente in der vorgegebenen Anordnung mit einer erhöhten Porosität der porösen Struktur zwischen den Filamenten an den einen oder mehreren zerbrechlichen Bereichen aufgebracht werden.

9. Verfahren nach Anspruch 8, wobei die höhere Porosität durch mindestens einen der folgenden Punkte erreicht wird: Filamente aus einem Aufbaumaterial mit erhöhter Lösungsmittelkonzentration, Filamente aus einem Aufbaumaterial mit weniger Bindemittel, Filamente aus einem Aufbaumaterial mit einem anderen Bindemittel, Filamente aus einem Aufbaumaterial, das weniger partikelförmiges Material enthält.

10. Verfahren nach einem der vorstehenden Ansprüche, wobei die Filamente in der vorbestimmten Anordnung mit einem vergrößerten Filament-zu-Filament-Abstand an dem einen oder den mehreren zerbrechlichen Bereichen aufgebracht werden, wobei der Filament-zu-Filament-Abstand einer gleichen Schicht an dem einen oder den mehreren zerbrechlichen Bereichen mindestens 20% größer ist als der Filament-zu-Filament-Abstand in benachbarten weniger zerbrechlichen Bereichen, stärker bevorzugt mindestens 200% größer als der Filament-zu-Filament-Abstand in benachbarten weniger zerbrechlichen Bereichen, noch stärker bevorzugt mindestens 400% größer als der Filament-zu-Filament-Abstand in benachbarten weniger zerbrechlichen Bereichen.

11. Verfahren nach einem der vorstehenden Ansprüche, wobei verschiedene zerbrechliche Bereiche mit unterschiedlicher vorgewählter Zerbrechlichkeit in der porösen Struktur gebildet werden, wobei die verschiedenen zerbrechlichen Bereiche konfiguriert sind, um bei unterschiedlichen Belastungen zu brechen.

12. Verfahren nach einem der vorstehenden Ansprüche, wobei die Filamente in dem einen oder den mehreren zerbrechlichen Bereichen einen verringerten Durchmesser im Vergleich zu dem Durchmesser der Filamente in den weniger zerbrechlichen Bereichen aufweisen.

13. Verfahren nach einem der vorstehenden Ansprüche, wobei Querschnitte an unterschiedlichen Positionen des einen oder der mehreren weniger zerbrechlichen Bereiche eine unterschiedliche Form oder unterschiedliche Abmessungen oder eine Kombination davon aufweisen.

14. Verfahren nach einem der vorstehenden Ansprüche, ferner einschließlich des Trocknens und/oder Kalzinierens der aufgebrachten porösen Struktur, wobei die Trocknungs- und/oder Kalzinierparameter derart gewählt werden, dass die spontane Rissbildung entlang der einen oder mehreren zerbrechlichen Regionen gefördert wird.

15. Dreidimensionale poröse Struktur (10), erhalten durch Extrusion eines Aufbaumaterials, wobei die poröse Struktur (10) miteinander verbundene Filamente (2) eines Aufbaumaterials in einer vorgegebenen Anordnung in einer Vielzahl von aufeinander gestapelten Schichten (11) aufweist, wobei das Aufbaumaterial eine viskose Materialzusammensetzung umfasst, die ein anorganisches partikelförmiges Material umfasst, wobei das Aufbaumaterial beim Aufbringen zu Filamenten (2) geformt wird, wobei die Filamente (2) der aufeinanderfolgenden Schichten (11) zumindest an Kontaktpunkten zwischen Filamenten (2) aufeinanderfolgender Schichten (11) miteinander verbunden sind, um die poröse Struktur (10) mit miteinander verbundenen Poren zwischen den Filamenten (2) zu erhalten, wobei die Filamente (2) der aufeinanderfolgenden Schichten (11) in einem Winkel zueinander stehen, wobei eine Vielzahl von weniger zerbrechlichen Bereichen (9) in der Anordnung von Filamenten (2) ausgebildet sind, um die Vielzahl von dreidimensionalen Teilen zu bilden, wobei die poröse Struktur (10) einen oder mehrere vorgeformte zerbrechliche Bereiche (7) in der Anordnung von Filamenten (2) zwischen der Vielzahl von dreidimensionalen Teilen enthält, wobei die zerbrechlichen Bereiche (7) benachbart positionierte dreidimensionale Teile miteinander verbinden, wobei die vorgegebene Anordnung von miteinander verbundenen Filamenten (2) derart konfiguriert ist, dass der eine oder die mehreren zerbrechlichen Bereiche (7) strukturell geschwächte Zonen der porösen Struktur (10) bilden, so dass die poröse Struktur (10) entlang des einen oder der mehreren zerbrechlichen Bereiche (7) unter Einwirkung einer Belastung und/oder einer Spannung bricht, welche die weniger zerbrechlichen Bereiche (9) nicht bricht, um die Vielzahl der dreidimensionalen Teile unter Einwirkung der Belastung und/oder Spannung lösbar zu machen.

## Revendications

1. Procédé de fabrication simultanée d'une pluralité de pièces tridimensionnelles poreuses, par fabrication d'une structure tridimensionnelle de la pluralité de pièces tridimensionnelles poreuses reliées entre elles, le procédé comprenant le fait de déposer des filaments interconnectés (2) d'un matériau de fabrication dans un agencement prédéterminé en une pluralité de couches empilées successivement (11), dans lequel le matériau de fabrication comprend une composition de matériau visqueuse comprenant un matériau particulaire inorganique, dans lequel les filaments (2) des couches consécutives (11) sont reliés les uns aux autres au moins en des points de contact entre filaments (2) des couches consécutives (11) pour obtenir la structure poreuse (10) avec des pores interconnectés (15) entre les filaments (2), les filaments (2) des couches consécutives (11) formant un angle entre eux, dans lequel une pluralité de régions moins cassantes (9) est formée dans l'agencement de filaments (2) pour former la pluralité de pièces tridimensionnelles, dans lequel une ou plusieurs régions cassantes présélectionnées (7) sont formées dans l'agencement de filaments (2) entre les pièces de la pluralité de pièces tridimensionnelles, et dans lequel les filaments (2) sont déposés de telle manière que lesdites une ou plusieurs régions cassantes (7) de la structure poreuse (10) sont reliées à la pluralité de régions moins cassantes (9), dans lequel les régions cassantes (7) relient entre elles des pièces tridimensionnelles positionnées de façon adjacente, dans lequel l'agencement prédéterminé de filaments interconnectés (2) est configuré de telle manière que lesdites une ou plusieurs régions cassantes (7) forment des zones structurellement affaiblies de la structure poreuse (10), de sorte que la structure poreuse (10) se casse le long desdites une ou plusieurs régions cassantes (7) sous l'influence d'une charge et/ou d'une contrainte qui ne casse pas les régions moins cassantes (9), afin de rendre les pièces tridimensionnelles détachables sous l'influence de la charge et/ou contrainte.

2. Procédé selon la revendication 1, dans lequel lesdites une ou plusieurs régions cassantes sont configurées pour se casser dans une direction le long d'une section transversale des filaments des régions cassantes qui s'étend en formant un angle par rapport à un axe longitudinal desdits filaments formant lesdites régions cassantes.

3. Procédé selon la revendication 1 ou 2, dans lequel la structure poreuse est soumise à une charge pour provoquer la rupture de la structure poreuse le long desdites une ou plusieurs régions cassantes qui relient la pluralité des pièces tridimensionnelles, la rupture causant la libération de la pluralité des pièces tridimensionnelles formées par les régions moins cassantes, dans lequel on récupère la pluralité de pièces tridimensionnelles séparées.

4. Procédé selon l'une quelconque des revendications précédentes, dans lequel le matériau de fabrication comprend en outre un solvant, notamment de l'eau et/ou un solvant organique, et/ou un matériau organique.

5. Procédé selon l'une quelconque des revendications précédentes, dans lequel le matériau de fabrication est une pâte visqueuse ou une suspension visqueuse du matériau particulaire inorganique.

6. Procédé selon l'une quelconque des revendications précédentes, dans lequel le matériau inorganique est un matériau actif de manière catalytique ou un matériau sorbant.

7. Procédé selon l'une quelconque des revendications précédentes, dans lequel les filaments sont déposés dans l'agencement prédéterminé avec une densité réduite de la structure poreuse dans lesdites une ou plusieurs régions cassantes, dans lequel la densité réduite est obtenue au moyen d'au moins une solution parmi : un nombre réduit de filaments par unité de longueur, des filaments ayant des dimensions plus petites, en particulier une section transversale plus petite, ou des filaments produits à partir d'un matériau de fabrication ayant une densité plus faible.

8. Procédé selon l'une quelconque des revendications précédentes, dans lequel les filaments sont déposés dans l'agencement prédéterminé avec une porosité accrue de la structure poreuse entre les filaments dans lesdites une ou plusieurs régions cassantes.

9. Procédé selon la revendication 8, dans lequel la porosité plus élevée est obtenue par au moins un élément parmi : des filaments constitués d'un matériau de fabrication ayant une concentration en solvant accrue, des filaments constitués d'un matériau de fabrication comportant moins de liant, des filaments constitués d'un matériau de fabrication comportant un liant différent, des filaments constitués d'un matériau de fabrication contenant moins de matériau particulaire.

10. Procédé selon l'une quelconque des revendications précédentes, dans lequel les filaments sont déposés dans l'agencement prédéterminé avec une distance de filament à filament accrue dans lesdites une ou plusieurs régions cassantes, dans lequel la distance de filament à filament d'une même couche dans lesdites une ou plusieurs régions cassantes est d'au moins 20 % supérieure à la distance de filament à filament des régions moins cassantes adjacentes, de préférence d'au moins 200 % supérieure à la distance de filament à filament des régions moins cassantes adjacentes, et mieux encore d'au moins 400 % supérieure à la distance de filament à filament des régions moins cassantes adjacentes.

11. Procédé selon l'une quelconque des revendications précédentes, dans lequel des régions cassantes différentes ayant une frangibilité présélectionnée variable sont formées dans la structure poreuse, dans lequel les différentes régions cassantes sont configurées pour se casser sous des charges différentes.

12. Procédé selon l'une quelconque des revendications précédentes, dans lequel dans lesdites une ou plusieurs régions cassantes, les filaments ont un diamètre réduit comparé au diamètre des filaments des régions moins cassantes.

13. Procédé selon l'une quelconque des revendications précédentes, dans lequel les sections transversales en différentes positions desdites une ou plusieurs régions cassantes ont une forme variable ou des dimensions variables ou une combinaison de celles-ci.

14. Procédé selon l'une quelconque des revendications précédentes, comprenant en outre le séchage et/ou le grillage de la structure poreuse déposée, dans lequel les paramètres de séchage et/ou de grillage sont choisis de telle manière que la fissuration spontanée le long desdites une ou plusieurs régions cassantes est favorisée.

15. Structure poreuse tridimensionnelle (10) obtenue par extrusion d'un matériau de fabrication, la structure poreuse (10) comportant des filaments interconnectés (2) d'un matériau de fabrication dans un agencement prédéterminé en une pluralité de couches empilées successivement (11), dans laquelle le matériau de fabrication comprend une composition de matériau visqueuse comprenant un matériau particulaire inorganique, lequel matériau de fabrication forme des filaments (2) lors du dépôt, dans laquelle les filaments (2) des couches consécutives (11) sont reliés les uns aux autres au moins en des points de contact entre filaments (2) des couches consécutives (11) pour obtenir la structure poreuse (10) avec des pores interconnectés entre les filaments (2), les filaments (2) des couches consécutives (11) formant un angle entre eux, dans laquelle une pluralité de régions moins cassantes (9) est formée dans l'agencement de filaments (2) pour former la pluralité de pièces tridimensionnelles, dans laquelle la structure poreuse (10) comprend une ou plusieurs régions cassantes préformées (7) dans l'agencement de filaments (2) entre les pièces de la pluralité de pièces tridimensionnelles, dans laquelle les régions cassantes (7) relient entre elles des pièces tridimensionnelles positionnées de façon adjacente, dans laquelle l'agencement prédéterminé de filaments interconnectés (2) est configuré de telle manière que lesdites une ou plusieurs régions cassantes (7) forment des zones structurellement affaiblies de la structure poreuse (10), de sorte que la structure poreuse (10) se casse le long desdites une ou plusieurs régions cassantes (7) sous l'influence d'une charge et/ou d'une contrainte qui ne casse pas les régions moins cassantes (9), afin de rendre les pièces tridimensionnelles détachables sous l'influence de la charge et/ou contrainte.
